# EUROPEAN PATENT APPLICATION

(11) **EP 4 811 014 A1**
(43) Date of publication of application: **23.09.2026**
(21) Application number: 24891812.0
(22) Date of filing: 15.11.2024
(51) Int. Cl.: G02B 13/00, G02B 13/18, G02B 9/12, G03B 9/02, G02B 3/00

(54) **LENS ASSEMBLY AND ELECTRONIC DEVICE COMPRISING SAME**

(30) Priority: 15.11.2023 KR 20230157927; 12.12.2023 KR 20230179920
(71) Applicant: Samsung Electronics Co., Ltd., Suwon-si, Gyeonggi-do 16677 (KR)
(72) Inventor: JANG, Youngsoo, Suwon-si Gyeonggi-do 16677 (KR); SEO, Jungpa, Suwon-si Gyeonggi-do 16677 (KR); PARK, Chiyoung, Suwon-si Gyeonggi-do 16677 (KR)
(74) Representative: HGF
(86) International application number: PCT/KR2024/018102
(87) International publication number: WO 2025/105866

(57) **Abstract**

According to an embodiment of the present disclosure, an electronic device (101) may be provided. The electronic device may comprise a lens assembly. The lens assembly may comprise: a lens group including a plurality of lenses arranged along a part of an optical axis in the direction from a subject side to an image side; an image sensor including an image-forming surface on which an image is formed; and a reflective member disposed between the lens group and the image sensor and configured to change a path of light having passed through the lens group once or twice. A first lens closest to the subject side among the plurality of lenses may comprise a synthetic resin and have positive refractive power, and the subject-side surface of the first lens may be formed to be convex toward the subject side. A second lens, which is the second closest lens to the subject side among the plurality of lenses, may have negative refractive power, the image-side surface of the second lens may be formed to be concave toward the image side, and at least one of the subject-side and image-side surfaces of the second lens may be formed as an aspheric surface. The subject-side surface of a lens closest to the image side among the plurality of lenses may be formed to be convex toward the subject side, and at least one of the subject-side and image-side surfaces of the lens closest to the image side may be formed as an aspheric surface. Various other embodiments are also possible

## Description

### [Technical Field]

Embodiments of the disclosure relate to a lens assembly and an electronic device including the same.

### [Background Art]

An optical device (e.g., a camera) may include an optical system including a plurality of lenses and an image sensor having a high pixel count (e.g., a solid-state image sensor (CCD or CMOS)). For example, a lens assembly may be implemented to have a low F-number (Fno) and low aberration so as to acquire a high-quality image (or a image and/or a video) having high resolution.

In a miniaturized electronic device such as a portable terminal, an overall length of the lens assembly (e.g., an overall length and/or height in an optical axis direction) may be limited, and thus it may be difficult to secure a sufficient telephoto ratio for implementing a function of a telephoto lens. Here, the overall length of the lens assembly being limited may mean, for example, that the number of lenses included in the lens assembly is limited. When the number of lenses that can be mounted in the lens assembly is limited, it may be difficult to acquire a high-quality image and/or a video. It may be difficult to manufacture a lens assembly having a low F-number and low aberration using only a limited number of lenses. To address this issue, a technique has been proposed in which a folded optical system configured to allow a path of light to be reflected or refracted at least once is formed by disposing a reflective member (e.g., a mirror or prism) in front of the lens assembly, so that a lens assembly capable of securing a sufficient telephoto ratio may be easily accommodated in an electronic device.

The above information may be provided as related art for the purpose of facilitating an understanding of the disclosure. No claim or determination is made as to whether any of the foregoing constitutes prior art related to the disclosure.

### [Detailed Description of the Invention]

### [Technical Solution]

An embodiment of the disclosure may provide an electronic device. The electronic device 101 may include a lens assembly. The lens assembly may include a lens group including a plurality of lenses aligned along a portion of an optical axis in a direction from an object side toward an image side, an image sensor including an imaging plane on which an image is formed, and a reflective member disposed between the lens group and the image sensor and configured to change a path of light passing through the lens group once or twice. Among the plurality of lenses, a first lens, which is closest to the object side, may include a synthetic resin and have positive refractive power, and an object side surface of the first lens may be convex toward the object side. Among the plurality of lenses, a second lens, which is second closest to the object side, may have negative refractive power, an image side surface of the second lens may be concave toward the image side, and at least one of an object side surface or the image side surface of the second lens may be aspherical. Among the plurality of lenses, a lens closest to the image side may have an object side surface that is convex toward the object side, and at least one of the object side surface or an image side surface of the lens closest to the image side may be aspherical. The lens assembly may satisfy Formula 1 and Formula 2 below.$25 < L 1 Abbe - L 2 Abbe < 60$$L 3 Abbe < 21$

Here, L1 Abbe in Formula 1 may be an Abbe number of the first lens L1, L2 Abbe may be an Abbe number of the second lens L2, and L3 Abbe in Formula 2 may be an Abbe number of the lens L3 closest to the image side among the plurality of lenses.

An embodiment of the disclosure may provide lens assembly. The lens assembly may include a lens group including a plurality of lenses aligned along a portion of an optical axis in a direction from an object side toward an image side, an image sensor including an imaging plane on which an image is formed, and a reflective member disposed between the lens group and the image sensor and configured to change a path of light passing through the lens group once or twice. Among the plurality of lenses, a first lens, which is closest to the object side, may include a synthetic resin and have positive refractive power, and an object side surface of the first lens may be convex toward the object side. Among the plurality of lenses, a second lens, which is second closest to the object side, may have negative refractive power, an image side surface of the second lens may be concave toward the image side, and at least one of an object side surface or the image side surface of the second lens may be aspherical. A third lens L3, which is third closest to the object side among the plurality of lenses, may have an object side surface S6 that is convex toward the object side, and at least one of the object side surface S6 or an image side surface S7 of the third lens (L3) may be aspherical. The lens assembly may satisfy Formula 1 and Formula 2 below.$25 < L 1 Abbe - L 2 Abbe < 60$$L 3 Abbe < 21$

Here, L1 Abbe in Formula 1 may be an Abbe number of the first lens L1, L2 Abbe may be an Abbe number of the second lens L2, and L3 Abbe in Formula 2 may be an Abbe number of the lens L3 closest to the image side among the plurality of lenses.

Various other embodiments may also be possible.

### [Brief Description of Drawings]

FIG. 1 is a block diagram of an electronic device according to an embodiment of the disclosure in a network environment.
FIG. 2 is a block diagram illustrating a camera module according to an embodiment of the disclosure.
FIG. 3 is a front perspective view of an electronic device according to an embodiment of the disclosure.
FIG. 4 is a rear perspective view of the electronic device according to an embodiment of the disclosure.
FIG. 5 is a view illustrating a configuration of a lens assembly according to an embodiment of the disclosure.
FIG. 6 is a view illustrating a configuration of a lens assembly according to an embodiment of the disclosure.
FIG. 7A is a view illustrating a configuration of a lens assembly according to an embodiment of the disclosure.
FIG. 7B is a graph illustrating spherical aberration curves of the lens assembly of FIG. 7A according to an embodiment of the disclosure.
FIG. 7C is a graph illustrating astigmatism curves of the lens assembly of FIG. 7A according to an embodiment of the disclosure.
FIG. 7D is a graph illustrating a distortion aberration curve of the lens assembly of FIG. 7A according to an embodiment of the disclosure.
FIG. 8A is a view illustrating a configuration of a lens assembly according to an embodiment of the disclosure.
FIG. 8B is a graph illustrating spherical aberration curves of the lens assembly of FIG. 8A according to an embodiment of the disclosure.
FIG. 8C is a graph illustrating astigmatism curves of the lens assembly of FIG. 8A according to an embodiment of the disclosure.
FIG. 8D is a graph illustrating a distortion aberration curve of the lens assembly of FIG. 8A according to an embodiment of the disclosure.
FIG. 9A is a view illustrating a configuration of a lens assembly according to an embodiment of the disclosure.
FIG. 9B is a graph illustrating spherical aberration curves of the lens assembly of FIG. 9A according to an embodiment of the disclosure.
FIG. 9C is a graph illustrating astigmatism curves of the lens assembly of FIG. 9A according to an embodiment of the disclosure.
FIG. 9D is a graph illustrating a distortion aberration curve of the lens assembly of FIG. 9A according to an embodiment of the disclosure.
FIG. 10A is a view illustrating a configuration of a lens assembly according to an embodiment of the disclosure.
FIG. 10B is a graph illustrating spherical aberration curves of the lens assembly of FIG. 10A according to an embodiment of the disclosure.
FIG. 10C is a graph illustrating astigmatism curves of the lens assembly of FIG. 10A according to an embodiment of the disclosure.
FIG. 10D is a graph illustrating a distortion aberration curve of the lens assembly of FIG. 10A according to an embodiment of the disclosure.
FIG. 11A is a view illustrating a configuration of a lens assembly according to an embodiment of the disclosure.
FIG. 11B is a graph illustrating spherical aberration curves of the lens assembly of FIG. 11A according to an embodiment of the disclosure.
FIG. 11C is a graph illustrating astigmatism curves of the lens assembly of FIG. 11A according to an embodiment of the disclosure.
FIG. 11D is a graph illustrating a distortion aberration curve of the lens assembly of FIG. 11A according to an embodiment of the disclosure.
FIG. 12A is a view illustrating a configuration of a lens assembly according to an embodiment of the disclosure.
FIG. 12B is a graph illustrating spherical aberration curves of the lens assembly of FIG. 12A according to an embodiment of the disclosure.
FIG. 12C is a graph illustrating astigmatism curves of the lens assembly of FIG. 12A according to an embodiment of the disclosure.
FIG. 12D is a graph illustrating a distortion aberration curve of the lens assembly of FIG. 12A according to an embodiment of the disclosure.

Throughout the accompanying drawings, like reference numerals may be assigned to like parts, components, and/or structures.

### [Mode for Carrying out the Invention]

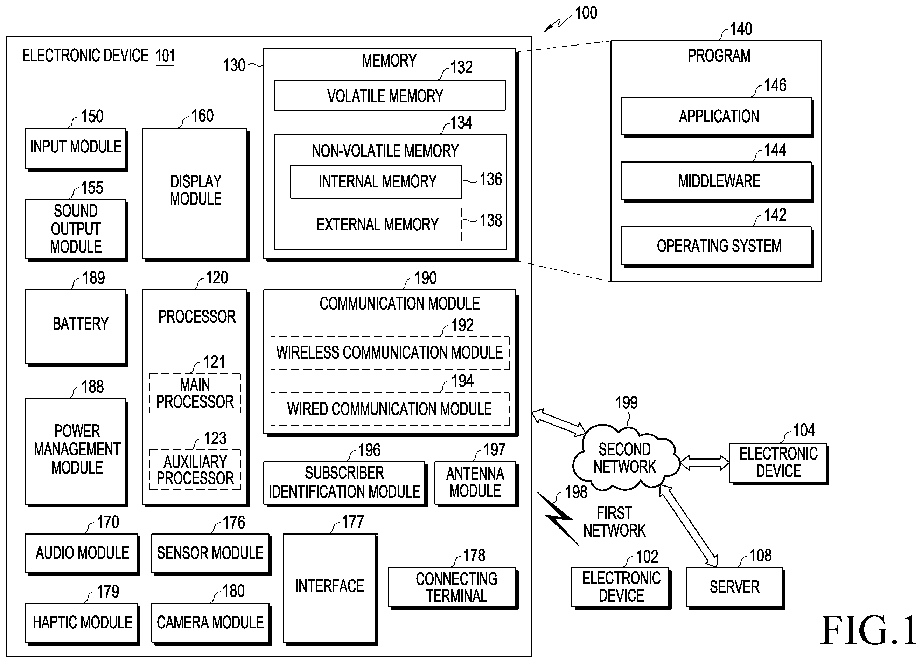

FIG. 1 is a block diagram illustrating an electronic device 101 in a network environment 100 according to an embodiment of the disclosure. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

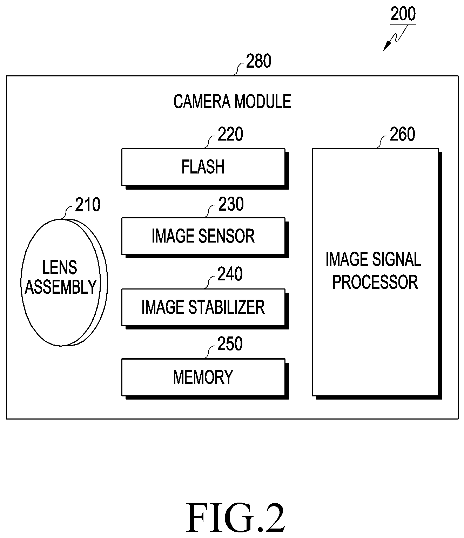

FIG. 2 is a block diagram 200 illustrating the camera module 290(e.g., the camera module 180 of FIG 1) according to various embodiments. Referring to FIG. 2, the camera module 290 may include a lens assembly 280, a flash 220, an image sensor 230, an image stabilizer 240, a memory 250 (e.g., buffer memory), or an image signal processor 260. According to an embodiment, the lens assembly 280 may include the image sensor 230. The lens assembly 280 may collect light emitted or reflected from an object whose image is to be taken. The lens assembly 280 may include one or more lenses. According to an embodiment, the camera module 290 may include a plurality of lens assemblies 280. In such a case, the camera module 290 may form, for example, a dual camera, a 360-degree camera, or a spherical camera. Some of the plurality of lens assemblies 280 may have the same lens attribute (e.g., view angle, focal length, auto-focusing, f number, or optical zoom), or at least one lens assembly may have one or more lens attributes different from those of another lens assembly. The lens assembly 280 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 280 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 280 in a particular direction, or control an operational attribute (e.g., adjust the read-out timing) of the image sensor 230 in response to the movement of the camera module 290 or the electronic device 101 including the camera module 290. This allows compensating for at least part of a negative effect (e.g., image blurring) by the movement on an image being captured. According to an embodiment, the image stabilizer 240 may sense such a movement by the camera module 290 or the electronic device 101 using a gyro sensor (not shown) or an acceleration sensor (not shown) disposed inside or outside the camera module 290. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 230.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 290. An image processed by the image signal processor 260 may be stored back in the memory 250 for further processing, or may be provided to an external component (e.g., the memory 130, the display device 160, the electronic device 102, the electronic device 104, or the server 108) outside the camera module 290. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display device 160 as it is or after being further processed.

According to an embodiment, the electronic device 101 may include a plurality of camera modules 290 having different attributes or functions. In such a case, at least one of the plurality of camera modules 280 may form, for example, a wide-angle camera and at least another of the plurality of camera modules 290 may form a telephoto camera. Similarly, at least one of the plurality of camera modules 290 may form, for example, a front camera and at least another of the plurality of camera modules290 may form a rear camera.

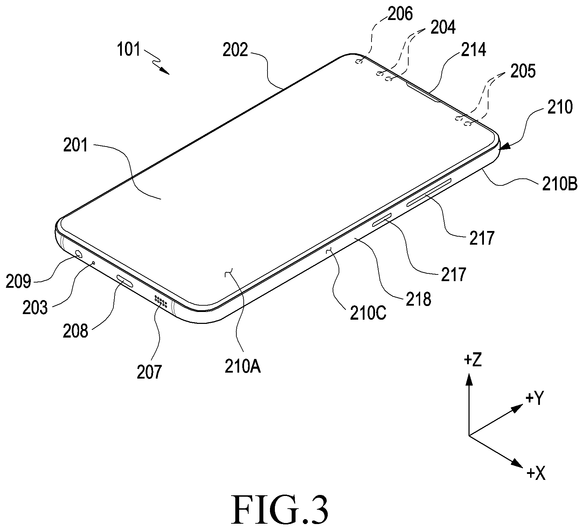

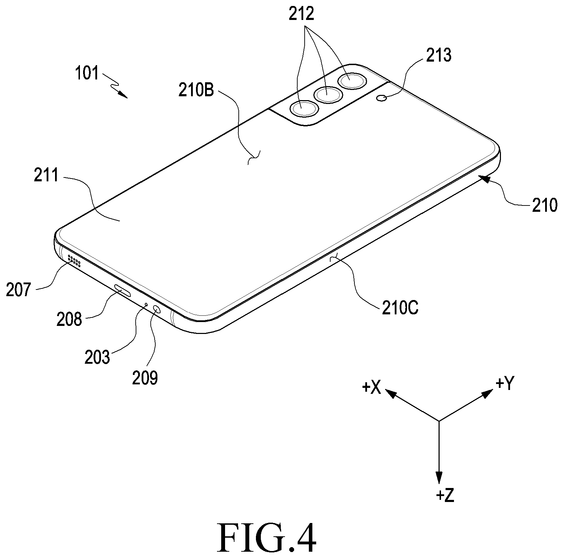

FIG. 3 is a front perspective view of an electronic device according to an embodiment of the disclosure. FIG. 4 is a rear perspective view of the electronic device according to an embodiment of the disclosure.

The configuration of the electronic device 101 of FIGS. 3 and 4 may be wholly or partially the same as that of the electronic device 101 of FIG. 1.

Referring to FIGS. 3 and 4, the electronic device 101 according to an embodiment may include a housing 210 including a first surface (or front surface) 210A, a second surface (or rear surface) 210B, and a side surface 210C surrounding a space between the first surface 210A and the second surface 210B. In an embodiment (not illustrated), the housing 210 may also refer to a structure forming a portion of the first surface 210A of FIG. 2, and the second surface 210B and the side surface 210C of FIG. 3. According to an embodiment, the first surface 210A may be formed by a front surface plate 202 at least a portion of which is substantially transparent (e.g., a glass plate including various coating layers, or a polymer plate). The second surface 210B may be formed by a rear surface plate 211 that is substantially opaque. The rear surface plate 211 may be formed of, for example, coated or colored glass, ceramic, polymer, metal (e.g., aluminum, stainless steel (STS), or magnesium), or a combination of at least two of the foregoing materials. The side surface 210C may be formed by a side surface structure (or a "side surface bezel structure") 218 coupled to the front surface plate 202 and the rear surface plate 211 and including metal and/or polymer. In an embodiment, the rear surface plate 211 and the side surface structure 218 may be integrally formed and may include the same material (e.g., a metal material such as aluminum).

Although not illustrated, the front surface plate 202 may include one or more regions bent toward the rear surface plate 211 at at least a portion of an edge and extending seamlessly. In an embodiment, only one of the regions in which the front surface plate 202 (or the rear surface plate 211) is bent and extends toward the rear surface plate 211 (or the front surface plate 202) may be included at one side edge of the first surface 210A. According to an embodiment, the front surface plate 202 or the rear surface plate 211 may have a substantially flat shape, and in this case, may not include a bent extension region. When a bent extension region is included, the thickness of the electronic device 101 at a portion including the bent extension region may be smaller than that of another portion.

According to an embodiment, the electronic device 101 may include one or more of a display 201, an audio module (not illustrated) including at least one audio hole 203, 207, or 214 (e.g., the audio module 170 of FIG. 1), sensor modules 204 (e.g., the sensor module 176 of FIG. 1), camera modules 205, 212, and 213 (e.g., the camera module 180 of FIG. 1), key input devices 217 (e.g., the input module 150 of FIG. 1), or connector holes 208 and 209 (e.g., the connection terminal 178 of FIG. 1). In an embodiment, at least one of the components (e.g., the key input devices 217 or the light-emitting element 206) of the electronic device 101 may be omitted or another component may be additionally included.

According to an embodiment, the display 201 may be visually exposed through, for example, a substantial portion of the front surface plate 202. In an embodiment, at least a portion of the display 201 may be visually exposed through the front surface plate 202 forming the first surface 210A or through a portion of the side surface 210C. In an embodiment, edges of the display 201 may be formed to be substantially identical to an outer peripheral shape of the front surface plate 202 adjacent thereto. In an embodiment (not illustrated), in order to expand an area through which the display 201 is visually exposed, a distance between an outer periphery of the display 201 and an outer periphery of the front surface plate 202 may be substantially uniform.

In an embodiment (not illustrated), a recess or an opening may be formed in a portion of a screen display region of the display 201, and the electronic device may include at least one of an audio hole 214, sensor modules 204, a camera module 205, or a light-emitting element 206 aligned with the recess or the opening. In an embodiment (not illustrated), the electronic device may include, on a rear surface of the screen display region of the display 201, at least one of an audio hole 214, sensor modules 204, a camera module 205, a fingerprint sensor (not illustrated), or a light-emitting element 206. In an embodiment (not illustrated), the display 201 may be coupled to or disposed adjacent to touch detection circuitry, a pressure sensor capable of measuring an intensity (pressure) of touch, and/or a digitizer configured to detect a stylus pen of a magnetic-field type. In an embodiment, at least some of the sensor modules 204 and/or at least some of the key input devices 217 may be disposed on the side surface 210C.

According to an embodiment, the audio module (not illustrated) may include a microphone hole 203 and audio holes 207 and 214. A microphone for acquiring an external sound may be disposed in the microphone hole 203, and in an embodiment, a plurality of microphones may be disposed so as to detect a direction of sound. According to an embodiment, the audio holes 207 and 214 may include an external audio hole 207 and a receiver hole 214 for a call. In an embodiment, the audio holes 207 and 214 and the microphone hole 203 may be implemented as a single hole, or the audio module may include a speaker without the audio holes 207 and 214 (e.g., a piezo speaker).

According to an embodiment, the sensor module 204 may generate an electrical signal or a data value corresponding to an operating state of an interior of the electronic device 101 or an environmental state external to the electronic device 101. The sensor module 204 may include, for example, a first sensor module 204 (e.g., a proximity sensor) disposed on the first surface 210A of the housing 210 and/or a second sensor module (not illustrated) (e.g., a fingerprint sensor). According to an embodiment, an additional sensor module may be disposed on the second surface 210B of the housing 210. The fingerprint sensor (not illustrated) may be disposed not only on the first surface 210A of the housing 210 (e.g., the display 201), but also on the second surface 210B or the side surface 210C. The electronic device 101 may further include, for example, at least one of a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

According to an embodiment, the camera modules 205, 212, and 213 may include a first camera module 205 facing the first surface 210A of the electronic device 101, and second camera modules 212 and/or a flash 213 facing the second surface 210B. For example, the first camera module 205 and/or the second camera module 212 may each include one or more lenses, an image sensor, and/or an image signal processor. According to an embodiment, some of the camera modules 205 and 212, such as the camera module 205, and/or some sensor modules (e.g., the sensor module 204) may be disposed to be exposed to the outside through at least a portion of the display 201. According to an embodiment, the first camera module 205 may include a punch hole camera disposed inside a hole or recess formed in a rear surface of the display 201. For example, the first camera module 205 may receive, in the interior of the electronic device 101, at least a portion of light incident toward the first surface 210A (or the front surface) of the electronic device 101 through the display 201. According to an embodiment, the first camera module 205 and/or the sensor module 204 may be disposed in an inner space of the electronic device 101 so as to contact an external environment through a transparent region of the display 201 extending to the front surface plate 202. In addition, some sensor modules 204 may be disposed to perform functions thereof without being visually exposed through the front surface plate 202 from the inner space of the electronic device.

According to an embodiment, the second camera module 212 may be disposed inside the housing 210 such that a lens is exposed through the second surface 210B (or the rear surface) of the electronic device 101. For example, the camera module 212 may be electrically connected to a printed circuit board (e.g., the printed circuit board 240a of FIG. 4). For example, the flash 213 may include a light-emitting diode or a xenon lamp. In an embodiment, one or more lenses (e.g., an infrared lens, a wide-angle lens, and a telephoto lens) and image sensors may be disposed on one surface of the electronic device 101. In an embodiment, the flash 213 may emit infrared light. For example, infrared light emitted from the flash 213 and reflected by an object may be received through a sensor module (not illustrated) disposed on the second surface 210B of the housing 210. The electronic device 101 or a processor (e.g., the processor 180 of FIG. 1) may detect depth information of the object based on a time point at which the infrared light is received by the sensor module.

The camera modules 205, 212, and 213 are not limited to the above structure, and various design changes, such as mounting only some camera modules or adding a new camera module, may be made according to the structure of the electronic device 101.

According to an embodiment, the electronic device 101 may include a plurality of camera modules (e.g., dual cameras or triple cameras) respectively having different attributes (e.g., fields of view) or functions. For example, a plurality of camera modules 205 and 212 including lenses having different angles of view may be provided, and the electronic device 101 may be configured to control the camera modules 205 and 212 to change a field of view thereof based on a user selection. For example, at least one of the plurality of camera modules 205 and 212 may be a wide-angle camera, and at least another one may be a telephoto camera. Similarly, at least one of the plurality of camera modules 205 and 212 may be a front camera, and at least another one may be a rear camera. In addition, the plurality of camera modules 205 and 212 may include at least one of a wide-angle camera, a telephoto camera, or an infrared (IR) camera (e.g., a time of flight (TOF) camera or a structured light camera). According to an embodiment, the IR camera may operate as at least a portion of the sensor module. For example, the TOF camera may operate as at least a portion of a sensor module (not illustrated) to detect a distance to an object.

According to an embodiment, the key input devices 217 may be disposed on the side surface 210C of the housing 210. In an embodiment, the electronic device 101 may not include some or all of the above-mentioned key input devices 217, and the key input devices 217 not included may be implemented in another form, such as soft keys on the display 201. In an embodiment, the key input devices may include sensor modules disposed on the second surface 210B of the housing 210.

According to an embodiment, the light-emitting element 206 may be disposed on, for example, the first surface 210A of the housing 210. The light-emitting element 206 may provide, for example, state information of the electronic device 101 in the form of light. In an embodiment, the light-emitting element 206 may provide, for example, a light source linked to an operation of the camera module 205. The light-emitting element 206 may include, for example, an LED, an IR LED, and a xenon lamp.

According to an embodiment, the connector holes 208 and 209 may include a first connector hole 208 capable of accommodating a connector (e.g., a USB connector) to transmit and receive power and/or data to and from an external electronic device, and/or a second connector hole 209 capable of accommodating a connector (e.g., an earphone jack) to transmit and receive an audio signal to and from an external electronic device.

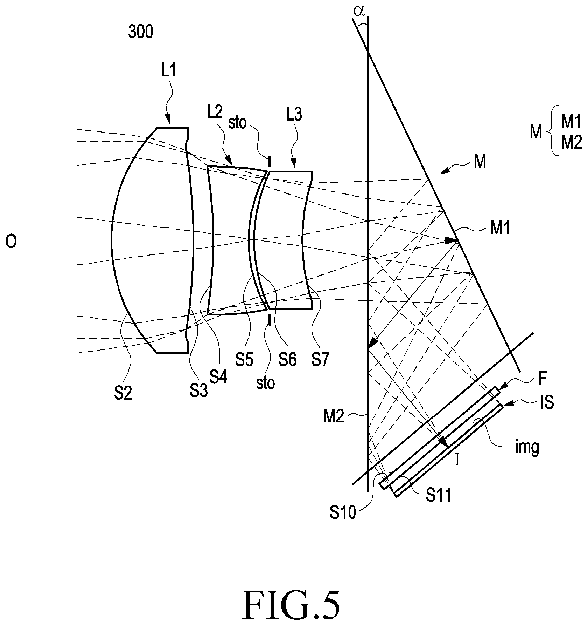

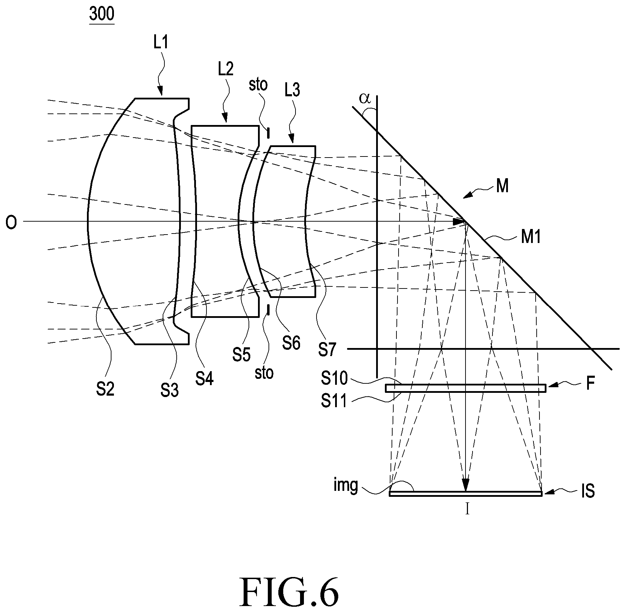

FIG. 5 is a view illustrating a configuration of a lens assembly according to an embodiment of the disclosure. FIG. 6 is a view illustrating a configuration of a lens assembly according to an embodiment of the disclosure.

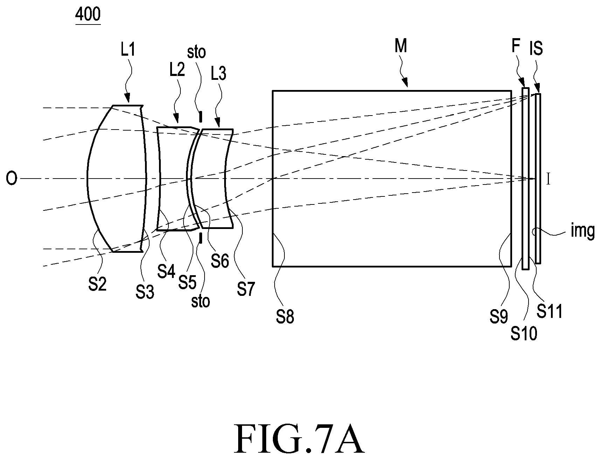

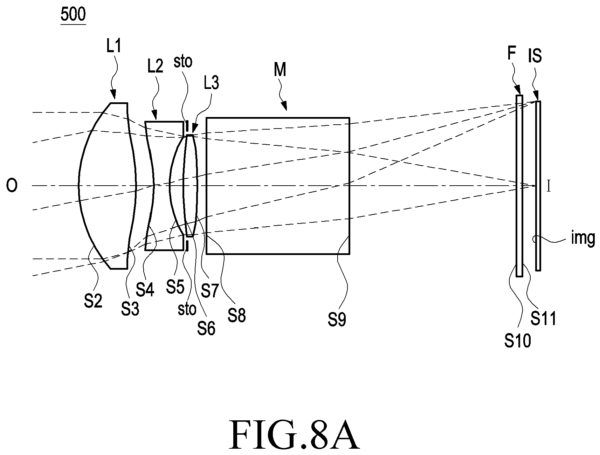

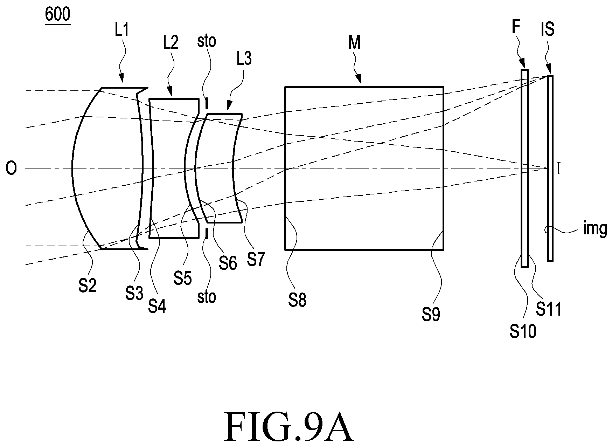

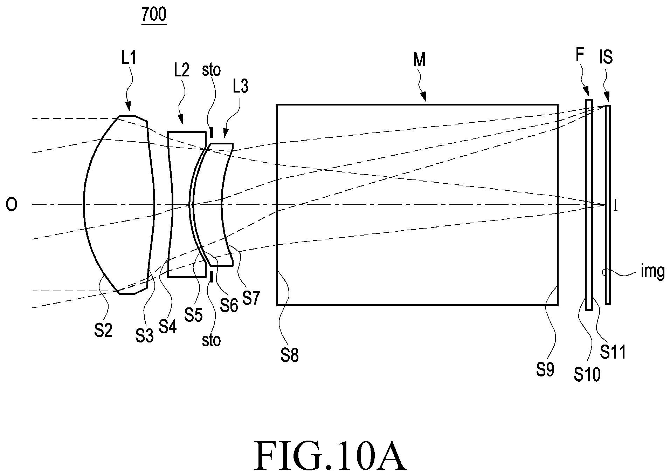

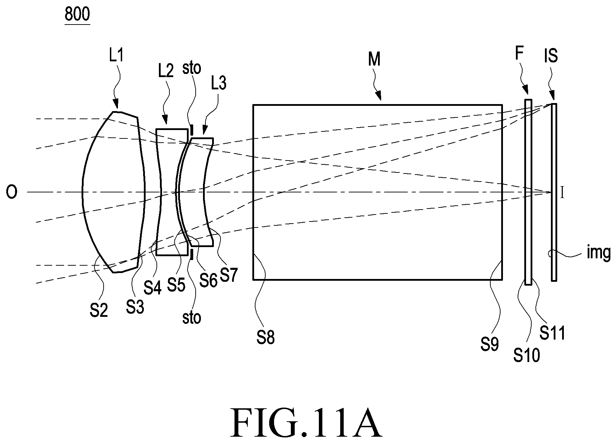

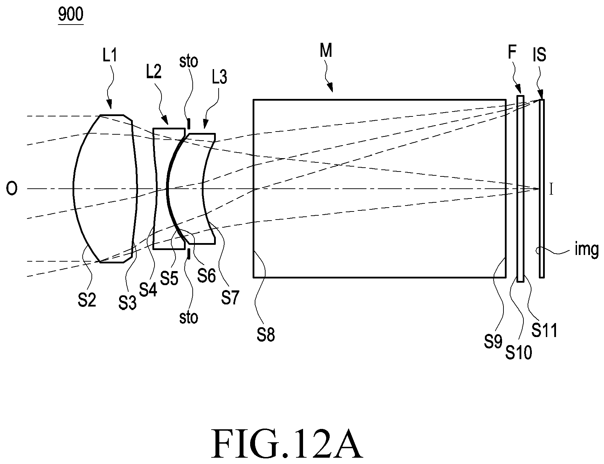

Referring to FIGS. 5 and 6, in an embodiment, an electronic device (e.g., the electronic device 101 of FIGS. 1, 3, and 4) may include a lens assembly 300 (e.g., the lens assembly 280 of FIG. 2) (or an optical system). A lens assembly 300 according to an embodiment of the disclosure (e.g., the lens assembly 400 of FIG. 7A, the lens assembly 500 of FIG. 8A, the lens assembly 600 of FIG. 9A, the lens assembly 700 of FIG. 10A, the lens assembly 800 of FIG. 11A, and/or the lens assembly 900 of FIG. 12A) may configure an optical device, such as a camera mounted in the electronic device 101 (e.g., the camera module 180 of FIG. 1, the camera module 290 of FIG. 2, the camera module 205 of FIG. 3, and/or the camera module 212 of FIG. 4).

According to an embodiment, the lens assembly 300 may include an image sensor IS, a lens group including a plurality of lenses (e.g., three lenses) L1, L2, and L3, a reflective member M, and/or an aperture sto. According to an embodiment, the lens assembly 300 may be disposed on an optical axis O-I extending from a direction in which an object (or an external object) O is located to an imaging plane img (or the image sensor IS) on which an image I is formed. For example, the lenses L1, L2, and L3, the aperture sto, the reflective member M, and/or the image sensor IS may be substantially aligned on the optical axis O-I.

According to an embodiment, the image sensor IS may receive at least a portion of light focused through the aperture sto and/or the lenses L1, L2, and L3 and may include an imaging plane img, which is a plane on which an image is formed. According to an embodiment, the image sensor IS may be a sensor mounted on a circuit board or the like and disposed in a state aligned with an optical axis, and may react to light. The image sensor IS may include, for example, a complementary metal-oxide semiconductor (CMOS) image sensor or a charge coupled device (CCD). The image sensor IS is not limited thereto and may include, for example, various devices configured to convert an image of an object into an electrical image signal. The image sensor IS may acquire an image of the object by detecting contrast information, grayscale information, color information, or the like of the object from light passing through the plurality of lenses.

Referring to FIG. 5, according to an embodiment, the imaging plane img of the image sensor IS may be disposed to be inclined with respect to a first direction in which the plurality of lenses L1, L2, and L3 of the lens group are arranged. Here, the first direction may refer to a direction parallel to a portion of the optical axis O-I passing through centers of the lenses L1, L2, and L3. In the embodiment of FIG. 5, for example, the imaging plane img of the image sensor IS may form an angle of about 30 degrees to about 45 degrees with the first direction. Referring to FIG. 6, according to an embodiment, the imaging plane img of the image sensor IS may be disposed to be parallel to a first direction in which the plurality of lenses L1, L2, and L3 of the lens group are arranged. However, in the disclosure, an arrangement of the image sensor IS is not limited to the embodiments of FIGS. 5 and 6, and may be configured and changed according to factors such as a magnification of a telephoto lens to be implemented by the lens assembly 300 and a design of a path of light using the lenses L1, L2, and L3 and the reflective member M.

According to embodiments, at least one of the plurality of lenses included in the lens assembly 300 may include a lens formed of a synthetic resin material (e.g., plastic). By forming the plurality of lenses included in the lens assembly 300 as lenses formed of a synthetic resin (e.g., plastic) and having a predetermined refractive index, design flexibility in a size or shape of the lens assembly may be high. By manufacturing the plurality of lenses included in the lens assembly as lenses formed of a synthetic resin (e.g., plastic) and having a predetermined refractive index, a weight of the lens assembly may be reduced, and manufacturing costs may be reduced compared to, for example, forming the lens assembly to include a glass material. For example, as the plurality of lenses included in the lens assembly 300 are formed of a synthetic resin material, the lens assembly 300 may be advantageous for reducing the weight and size of an electronic device (e.g., the electronic device 101 of FIGS. 1 to 3) in which the lens assembly 300 is mounted.

According to an embodiment, at least some of the lenses L1, L2, and L3 may have at least one of an object side surface or an image side surface formed as an aspheric surface. For example, by forming a surface of each of the lenses L1, L2, and L3 as an aspheric surface, spherical aberration that may occur in the lenses may be suppressed, occurrence of coma at a peripheral portion of the image sensor IS may be prevented, astigmatism may be more easily controlled, and occurrence of field curvature from a central portion to the peripheral portion of the imaging plane img of the image sensor IS may be reduced.

Referring to FIGS. 5 and 6, in an embodiment, the lens group of the lens assembly 300 may include a plurality of lenses (e.g., at least three lenses). According to an embodiment, the lens group of the lens assembly 300 may include a first lens L1, a second lens L2, and a third lens L3 sequentially disposed and/or aligned along the optical axis O-I from an object side toward an image side. For example, centers of the lenses L1, L2, and L3 may be disposed on the optical axis O-I. However, in the disclosure, the number of lenses is not limited to the embodiments of FIGS. 5 and 6. For example, the lens group of the lens assembly 300 may include four or more lenses and may further include, for example, an additional lens aligned along the optical axis O-I together with the first lens L1, the second lens L2, and the third lens L3.

In the disclosure, an object side may indicate a direction in which an object O is located, and an image side may indicate a direction in which an imaging plane img (or an image sensor IS) on which an image I is formed is located. In the following description, for example, the lenses L1, L2, and L3 and/or the reflective member M may respectively include an "object side surface," which is a surface facing the object O, and an "image side surface," which is a surface facing the imaging plane img on which the image I is formed. For example, the first lens L1 may include an object side surface S2 and an image side surface S3. For example, the second lens L2 may include an object side surface S4 and an image side surface S5. For example, the third lens L3 may include an object side surface S6 and an image side surface S7.

In the following description regarding the lenses, the shapes of the object side surfaces, which are the surfaces of the lenses L1, L2, and L3 facing the object O, and/or the image side surfaces, which are surfaces facing the image sensor IS (or the imaging plane img), may be described using the terms "concave" or "convex." For example, the expression "the object side surface is concave (toward the object side)" may describe a shape in which a center of curvature of the object side surface is located on the object O side. The expression "the object side surface is convex (toward the object side)" may describe a shape in which a center of curvature of the object side surface is located on the image sensor IS side. In the disclosure, a surface of a lens may include a paraxial area (or a chief area) around a point at which the surface intersects the optical axis O-I, and a marginal area around the paraxial area or spaced apart from the paraxial area. In the disclosure, a reference to a shape of a surface of a lens may be a description regarding a shape of a paraxial area of the surface of the lens. For example, even when one surface of a lens (e.g., one surface of the first lens L1 (or a paraxial area of the corresponding surface)) is described as having a convex shape, an edge portion of the one surface of the lens may be concave. Likewise, even when one surface of a lens (or a paraxial area of the corresponding surface) is described as having a concave shape, an edge portion of the one surface of the lens may be convex.

According to an embodiment, the first lens L1 may be a lens closest to the object O side (or the first lens from the object side) and may have positive refractive power. According to an embodiment, at least one of the object side surface S2 or the image side surface S3 of the first lens L1 may be aspherical. For example, the shape of the object side surface S2 that is convex toward the object O side may suppress an increase in spherical aberration due to an increase in diameters of the lenses L1, L2, and L3. In an embodiment, the first lens may be formed of a material including a synthetic resin (e.g., plastic). In addition, for example, as the first lens L1 is formed of a material including a synthetic resin, shape-related restrictions caused by the first lens L1 on the remaining lenses including the second lens L2 (e.g., the third lens L3) may be reduced, compared to a case in which the first lens L1 is formed of a glass material, and high flexibility in lens design may be secured. For example, as at least some of the plurality of lenses L1, L2, and L3 included in the lens assembly 300, including the first lens L1, are formed of a material including a synthetic resin, the lens assembly 300 and an electronic device (e.g., the electronic device 101 of FIGS. 1 to 3) in which the assembly 300 is mounted may be reduced in weight. For example, at least a portion including a region (or a paraxial area) of the image side surface S3 of the first lens L1 adjacent to the optical axis O-I may be convex toward the image I side.

According to an embodiment, the second lens L2 may be a lens second closest to the object O side (or a lens disposed second from the object O side) and may have negative refractive power. According to an embodiment, the image side surface S5 of the second lens L2 may be concave toward the image side. According to an embodiment, at least one of the object side surface S4 or the image side surface S5 of the second lens L2 may be aspherical. For example, at least a portion including a region (or a paraxial area) of the object side surface S4 of the second lens L2 adjacent to the optical axis O-I may be concave toward the object O side.

According to an embodiment, the third lens L3 may be a lens third closest to the object O side (or a lens disposed third from the object O side), or a lens closest to the image I side. According to an embodiment, the object side surface S6 of the third lens L3 may be convex toward the object side. According to an embodiment, at least one of the object side surface S6 or the image side surface S7 of the third lens L3 may be aspherical. For example, the third lens L3 may have positive refractive power or negative refractive power.

In an embodiment, at least one of the lenses L1, L2, and L3 and/or the image sensor IS may be configured to reciprocate along the optical axis O-I. According to an embodiment, an electronic device (e.g., the electronic device 101 of FIG. 1 and/or the electronic device 101 of FIGS. 3 and 4) or a processor (e.g., the processor 120 of FIG. 1) may be configured to focus or adjust a focal length by reciprocating the lenses L1, L2, and L3 and/or the image sensor IS along the optical axis O-I.

In an embodiment, an electronic device (e.g., the electronic device 101 of FIG. 1 and/or the electronic device 101 of FIGS. 3 and 4) or a processor (e.g., the processor 120 of FIG. 1) may be configured to perform a focusing operation (e.g., auto focusing (AF)) by moving at least one of the plurality of lenses L1, L2, and L3 in a first direction in which the plurality of lenses L1, L2, and L3 are arranged. Here, the first direction may refer to a virtual axis direction (or an axis direction) passing through centers of the lenses L1, L2, and L3 when the lenses L1, L2, and L3 are in a stationary state, and may be parallel to a portion of the optical axis O-I. According to an embodiment, an electronic device (e.g., the electronic device 101 of FIG. 1 and/or the electronic device 101 of FIGS. 3 and 4) or a processor (e.g., the processor 120 of FIG. 1) may be configured to perform an optical image stabilization (OIS) operation by moving at least one of the lenses L1, L2, and L3 in at least one direction (e.g., a left-right direction and an up-down direction) perpendicular to the first direction in which the plurality of lenses L1, L2, and L3 are arranged. According to an embodiment, when at least one of the lenses L1, L2, and L3 is moved in the first direction and/or at least one direction (e.g., a left-right direction and an up-down direction) perpendicular to the first direction, the image sensor IS and/or the reflective member M may be maintained in a stationary state. However, components moved to perform the focusing operation (e.g., AF) and/or the optical image stabilization (OIS) operation are not limited to the lenses L1, L2, and L3, and the focusing operation and/or the optical image stabilization operation may also be performed by moving the image sensor IS and/or the reflective member M. According to an embodiment, an electronic device (e.g., the electronic device 101 of FIG. 1 and/or the electronic device 101 of FIGS. 3 and 4) or a processor (e.g., the processor 120 of FIG. 1) may be configured to perform a focusing operation (e.g., auto focusing (AF)) by moving the image sensor IS and/or the reflective member M in a first direction in which the plurality of lenses L1, L2, and L3 are arranged and/or to perform an optical image stabilization (OIS) operation by moving the image sensor IS and/or the reflective member M in at least one direction (e.g., a left-right direction and an up-down direction) perpendicular to the first direction.

According to an embodiment, the reflective member M may be disposed between the lenses L1, L2, and L3 of the lens group and the image sensor IS. For example, the reflective member M may include an object side surface S8 and an image side surface S9. The reflective member M may be an optical member configured to refract and/or reflect light passing through the lenses L1, L2, and L3 of the lens group and incident on the image sensor IS. For example, a path of a chief ray of a bundle of light rays passing through the reflective member M may be parallel to a chief ray incident on the lens assembly 300. According to an embodiment, the reflective member M may include at least one mirror and/or at least one prism configured to refract and/or reflect light. For example, the reflective member M may be configured to change a path of light at least once. According to an embodiment, the lens assembly 300 may implement a folded optical system (or a folded camera) by including the reflective member M. For example, by including the reflective member M, the lens assembly 300 may secure a focal length thereof in a limited accommodation space according to miniaturization and/or slimming of an electronic device (e.g., the electronic device 101 of FIGS. 3 and 4).

In an embodiment, the reflective member M may be configured to change a path of light transmitted from the lenses L1, L2, and L3 of the lens group once or twice.

Referring to FIG. 5, according to an embodiment, the reflective member M may be configured to change a path of light twice and may include a first reflective surface M1 and a second reflective surface M2. For example, the first reflective surface M1 may be configured to reflect light transmitted from the lenses L1, L2, and L3 and transmit the light to the second reflective surface M2. For example, the second reflective surface M2 may be configured to reflect light transmitted from the first reflective surface M1 and transmit the light to the image sensor IS. According to an embodiment, the first reflective surface M1 and the second reflective surface M2 of the reflective member M may be included in at least one mirror and/or at least one prism. According to an embodiment, the reflective member M may be a single prism including the first reflective surface M1 and the second reflective surface M2. According to an embodiment, when the first reflective surface M1 and/or the second reflective surface M2 is configured to only reflect light without refraction, the corresponding reflective surface may be replaced with a mirror. According to an embodiment, the reflective member M may include a first prism including the first reflective surface M1 and a second prism including the second reflective surface M2. For example, referring to FIG. 5, an angle (e.g., α of FIG. 5) formed by a plane (e.g., the second reflective surface M2) perpendicular to a chief ray of a bundle of light rays incident on the reflective member M and the first reflective surface M1 may be about 20 degrees to about 40 degrees or about 25 degrees to about 35 degrees.

Referring to FIG. 6, according to an embodiment, the reflective member M may be configured to change a path of light once and may include the first reflective surface M1. For example, the first reflective surface M1 may be configured to reflect light transmitted from the lenses L1, L2, and L3 and transmit the light to the image sensor IS. According to an embodiment, the reflective member M may be a single prism including the first reflective surface M1. For example, when the first reflective surface M1 is configured to only reflect light without refraction, the reflective member M may be a mirror including the first reflective surface M1. For example, referring to FIG. 6, an angle (e.g., α of FIG. 6) formed by a plane perpendicular to a chief ray of a bundle of light rays incident on the reflective member M and the first reflective surface M1 may be about 35 degrees to about 55 degrees or about 40 degrees to about 50 degrees, for example, about 45 degrees.

For example, when a high-performance, large-sized image sensor IS is included, quality of a captured image of an electronic device (e.g., the electronic device 101 of FIGS. 3 and 4) may be improved. For example, a maximum image height MAX IH of the image sensor IS of the disclosure may have a size of about 3 mm to about 4 mm or about 3.3 mm to about 3.7 mm (e.g., 3.575 mm). Here, the maximum image height MAX IH of the image sensor IS may mean a maximum value of half of a diagonal length of the image sensor IS. However, as the image sensor IS becomes larger, the corresponding lens assembly 300 may be difficult to mount in a slim electronic device 101. For example, the thickness of the electronic device may increase due to the length or width of the image sensor IS. According to an embodiment, the lens assembly 300 may secure flexibility in design regarding an arrangement direction of the lenses L1, L2, and L3 or a disposition direction of the image sensor IS by including at least one reflective member M, and thus may be easily mounted in a miniaturized and/or slim electronic device 101 even when the image sensor IS becomes larger.

According to an embodiment, the aperture sto may be disposed on an object O side with respect to at least one lens (e.g., the third lens L3) of the lens group and may substantially define a region through which light is incident on the at least one lens (e.g., the third lens L3) of the lens group. For example, the at least one lens (e.g., the third lens L3) of the lens group may be substantially disposed between the aperture sto and the image sensor IS and may focus light incident through the aperture sto and cause the focused light to be incident on the image sensor IS. According to an embodiment, the aperture sto may be disposed around the third lens L3 or on one surface of the third lens L3. For example, the aperture sto may be disposed adjacent to the object side surface S6 of the third lens L3 or may be implemented on the object side surface S6 of the third lens L3.

According to an embodiment, the lens assembly 300 may further include an infrared blocking filter F. According to an embodiment, the infrared blocking filter F may include an object side surface S10 and an image side surface S11. For example, the infrared blocking filter F may block light in a wavelength band (e.g., infrared light) that is not visible by a user's naked eye but is detected by a film or the image sensor IS. For example, in a lens assembly or an electronic device 101 for detecting infrared light, the infrared blocking filter F may be replaced with a pass filter configured to transmit infrared light and block visible light. For example, the infrared blocking filter F may be aligned with the plurality of lenses L1, L2, and L3 of the lens group, the aperture sto, and/or the image sensor IS along the optical axis O-I.

Unless otherwise specified, a radius of curvature (or radius) and a thickness of each of the lenses L1, L2, and L3 of the disclosure, and an effective focal length (EFL), a back focal length (BFL), a total track length (TTL) of the lens assembly 300, 400, 500, 600, 700, 800, or 900, or an image height (IH) of the image sensor IS may all have units of mm. In addition, the radius of curvature (or radius), the effective focal length (EFL), the TTL, the SD, the thickness of each of the lenses L1, L2, and L3, or the image height (IH) of the image sensor IS may be distances measured along the optical axis O-I.

Hereinafter, Formula 1 and Formula 2 satisfied by the lens assembly 300 according to the embodiments of FIGS. 5 and 6 and Formula 3 to Formula 5 that may be satisfied by the lens assembly 300 according to embodiments will be described.

According to an embodiment, the lens assemblies 400, 500, 600, 700, 800, and 900, which will be described below with reference to FIGS. 7A to 12D, may satisfy Formula 1 and Formula 2 below. According to an embodiment, the lens assemblies 400, 500, 600, 700, 800, and 900, which will be described below with reference to FIGS. 7A to 12D, may satisfy Formula 3, Formula 4, and/or Formula 5 below.

According to an embodiment, the lens assembly 300 may satisfy Formula 1 below.$25 < L 1 Abbe - L 2 Abbe < 60$

Here, L1 Abbe may be an Abbe number of a lens closest to the object O side among the plurality of lenses L1, L2, and L3 of the lens assembly 300 (or included in a lens group thereof), or of the first lens L1, and L2 Abbe may be an Abbe number of a lens second closest to the object O side among the plurality of lenses L1, L2, and L3 of the lens assembly 300 (or included in the lens group thereof), or of the second lens L2.

According to an embodiment, when L1 Abbe - L2 Abbe of Formula 1 is about 25 or less, it may be difficult to minimize chromatic aberration of the lens assembly 300. When L1 Abbe - L2 Abbe of Formula 1 is about 60 or more, it may be difficult to minimize chromatic aberration of the lens assembly 300, and image quality of an image (or a still image and/or a video) acquired using the lens assembly 300 may deteriorate.

According to an embodiment, the lens assembly 300 may satisfy Formula 2 below.$L 3 Abbe < 21$

Here, L3 Abbe may be an Abbe number of a lens closest to the image I side among the plurality of lenses L1, L2, and L3 of the lens assembly 300 (or included in the lens group thereof), or of the third lens L3.

According to an embodiment, when L3 Abbe of Formula 2 is about 21 or more, spherical aberration for each wavelength of light may increase at a central region or a paraxial area of each of the lenses L1, L2, and L3, chromatic aberration may increase at a peripheral region of each of the lenses L1, L2, and L3, and thus deterioration in image quality may occur. Further, when the number of lenses is increased to address such deterioration in image quality, miniaturization of the lens assembly 300 may become difficult.

It may be difficult to minimize chromatic aberration of the lens assembly 300, field curvature from the paraxial area to an edge area of the imaging plane img of the image sensor IS may increase, and image quality of an image and/or a video acquired using the lens assembly 300 may deteriorate.

According to an embodiment, the lens assembly 300 may satisfy Formula 3 below.$1.15 < OTTL / BFL < 1.71$

Here, OTTL may be an optical total length on the object side and may be a distance from an apex of the object side surface S2 of a lens closest to the object O side, or the first lens L1, to the image sensor IS, and BFL may be a back focal length and may be a distance from the apex of the image side surface S7 of a lens closest to the image I side, or the third lens L3, to the imaging plane img of the image sensor IS.

According to an embodiment, when OTTL/BFL of Formula 3 is about 1.15 or less, manufacturing sensitivity may increase during manufacturing and assembly of the lenses. When OTTL/BFL of Formula 3 is about 1.71 or more, the overall size of the lens assembly 300 may increase, which may run counter to a demand for miniaturization and weight reduction of the lens assembly 300 and/or a demand for miniaturization and weight reduction of the electronic device 101 in which the lens assembly 300 is to be mounted.

According to an embodiment, the lens assembly 300 may satisfy Formula 4 below.$0.8 < EFL / L 3 EFL < 2.16$

Here, EFL may be the effective focal length or the total focal length of the lens assembly 300.

According to an embodiment, when EFL/L3 EFL of Formula 4 is about 0.8 or less, the overall size of the lens assembly 300 may increase, which may run counter to a demand for miniaturization and weight reduction of the lens assembly 300 and/or a demand for miniaturization and weight reduction of the electronic device 101 in which the lens assembly 300 is to be mounted. When EFL/L3 EFL of Formula 4 is about 2.16 or more, the sensitivity of spherical aberration of the lens assembly 300 may increase, and thus manufacture of the lens assembly 300 may become difficult.

According to an embodiment, the lens assembly 300 may satisfy Formula 5 below. $- 0.86 < L 2 EFL / L 1 EFL < - 0.51$

Here, L1 EFL may be a focal length of a lens closest to the object O side, or the first lens L1, and L2 EFL may be a focal length of a lens second closest to the object O side, or the second lens L2.

According to an embodiment, when L2 EFL/L1 EFL of Formula 5 is about -0.86 or less, field curvature from a paraxial area to an edge area of the imaging plane img of the image sensor IS may increase, and manufacture of the lens assembly 300 may become difficult. When L2 EFL/L1 EFL of Formula 5 is greater than about -0.51, the overall size of the lens assembly 300 may increase, which may run counter to a demand for miniaturization and weight reduction of the lens assembly 300 and/or a demand for miniaturization and weight reduction of the electronic device 101 in which the lens assembly 300 is to be mounted.

Table 1 below shows numerical values for Formulas 1 to 5 of the lens assemblies 400, 500, 600, 700, 800, and 900 according to Examples 1 to 6, which will be described below with reference to FIGS. 7A to 12D, as embodiments including all of the configurations and characteristics of the lens assembly 300 described above with reference to FIGS. 5 and 6. Referring to Table 1, it can be seen that the lens assemblies 400, 500, 600, 700, 800, and 900 of Examples 1 to 6 satisfy Formulas 1 to 5 described above.

**[Table 1]**

| | L2 Abbe - L1 Abbe | OTTL/BF L | EFL/L3 EFL | L2 EFL/L1 EFL | L3 Abbe | Field of view |
|---|---|---|---|---|---|---|
| Example 1 | 30.17 | 1.44 | 1.13 | -0.72 | 18.15 | 23.1 |
| Example 2 | 30.17 | 1.35 | 1.75 | -0.63 | 19.24 | 22.7 |
| Example 3 | 30.17 | 1.51 | 1.25 | -0.7 | 18.15 | 22.5 |
| Example 4 | 30.17 | 1.36 | 1.11 | -0.72 | 18.15 | 23.1 |
| Example 5 | 30.17 | 1.35 | 1.00 | -0.76 | 17.98 | 23.2 |
| Example 6 | 55.67 | 1.38 | 1.96 | -0.61 | 18.15 | 23.0 |

### [Example 1]

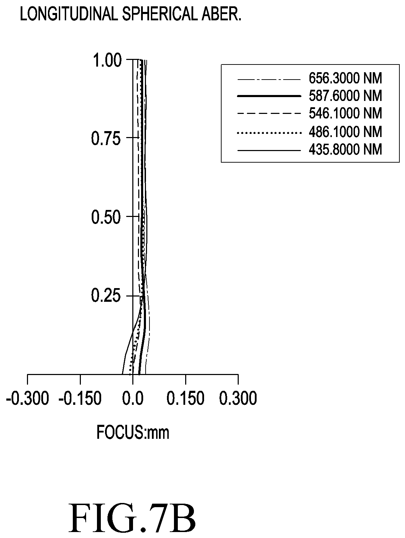

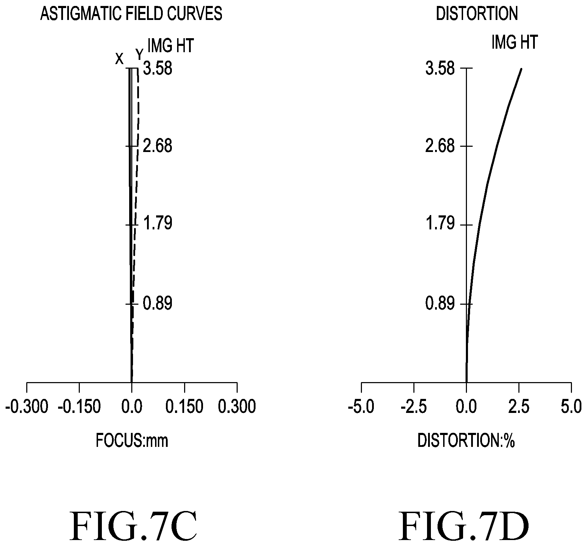

FIG. 7A is a view illustrating a configuration of a lens assembly according to an embodiment of the disclosure. FIG. 7B is a graph illustrating spherical aberration curves of the lens assembly of FIG. 7A according to an embodiment of the disclosure. FIG. 7C is a graph illustrating astigmatism curves of the lens assembly of FIG. 7A according to an embodiment of the disclosure. FIG. 7D is a graph illustrating a distortion aberration curve of the lens assembly of FIG. 7A according to an embodiment of the disclosure.

In an embodiment, the configuration of the lens assembly 400 may be at least partially identical or similar to the configurations of the lens assemblies 300 described above with reference to FIGS. 5 and 6, may satisfy Formula 1 and Formula 2 described above, and may be manufactured to have specifications illustrated in Table 2 below. According to an embodiment, the configuration of the lens assembly 400 may satisfy Formula 3, Formula 4, and/or Formula 5 described above with reference to FIGS. 5 and 6.

In an embodiment, the lens assembly 400 of FIG. 7A may include all of the configurations and characteristics of the lens assemblies 300 described above with reference to FIGS. 5 and 6. For example, the descriptions of the lenses L1, L2, and L3, the reflective member M, the image sensor IS, the aperture sto, and the filter F of each of the lens assemblies 300 described above with reference to FIGS. 5 and 6 may be equally applied to the lens assembly 400 of FIG. 7A, and thus descriptions thereof may be omitted below. The arrangement of the reflective member M and the image sensor IS with respect to the lenses L1, L2, and L3 of each of the lens assemblies 300 described above with reference to FIGS. 5 and 6 may be applied to the lens assembly 400 of FIG. 7A.

In an embodiment, the lens assembly 400 may be manufactured according to the specifications illustrated in Table 2 below and may have the aspheric coefficients of Table 3. In Table 2, "Lens surface 1" may indicate a gap between the first lens L1 and the object O, and a measured value of the thickness may be a distance of the gap or an air gap.

The lens assembly 400 implemented according to the specifications of Table 2 below may relate to a telephoto lens having a field of view (FOV) of about 14.61 degrees. In addition, the lens assembly 300 implemented according to the specifications of Table 2 below may have an effective focal length (EFL) of about 17 mm, an F-number (Fno) of about 2.843, an optical total length (OTTL) mm from an image plane of about 18.774, a maximum image height (Max IH) of the image sensor IS of about 3.575 mm, and a total field of view (FOV) of about 23.1 degrees.

**[Table 2]**

| Lens surface | Curvature of radius | Thickness | H-Ape | Effective focal length (EFL) | Refractive index (nd) | Abbe number (vd) |
|---|---|---|---|---|---|---|
| obj | infinity | infinity | | | | |
| 1 | infinity | 0.00000 | 3.32828 | | | |
| 2* | 4.82121 | 2.50000 | 3.10000 | 6.421 | 1.54410 | 56.11 |
| 3* | -10.52938 | 0.57283 | 2.75004 | | | |
| 4* | -10.58529 | 1.10178 | 2.38023 | -4.622 | 1.61444 | 25.94 |
| 5* | 4.08570 | 0.16283 | 2.10000 | | | |
| 6*(sto) | 4.29003 | 1.43339 | 1.90000 | 15.043 | 1.68042 | 18.15 |
| 7* | 6.32091 | 2.00000 | 1.85649 | | | |
| 8 | infinity | 10.00000 | 2.18114 | infinity | 1.55949 | 39.28 |
| 9 | infinity | 0.50000 | 3.39436 | | | |
| 10 | infinity | 0.21000 | 3.49019 | infinity | 1.51680 | 64.17 |
| 11 | infinity | 0.27365 | 3.51642 | | | |
| img | infinity | 0.02000 | 3.57580 | | | |

Table 3 below lists aspheric coefficients of the lenses L1, L2, and L3, and the aspheric coefficients may be calculated through Equation 1 below. $z - \frac{c ′ {y}^{2}}{1 \left|√1-\left(K′ 1\right)c{′}^{2} {y}^{2}\right.} Λ {y}^{4} B {y}^{6} C {y}^{8} \left|D {y}^{10} E {y}^{12} F {y}^{14} G {y}^{16}\right| / L {y}^{18} J {y}^{20} \left|K {y}^{22} L {y}^{24} M {y}^{26} N {y}^{28}\right| O {y}^{30}$

Here, "z" may indicate a distance (sag) in a direction of the optical axis O-I from an apex of a lens, "c" may indicate a reciprocal of a radius of curvature at the apex of the lens, "y" may indicate a distance in a direction perpendicular to the optical axis, "K'" may indicate a Conic constant, and "A," "B," "C," "D," "E," "F," "G," "H," "I," "J," "K," "L," "M," "N," and "O" may respectively indicate aspheric coefficients.

**[Table 3]**

| Lens surface | S2 | S3 | S4 | S5 | S6 | S7 |
|---|---|---|---|---|---|---|
| Curvature of radius | 4.82121E+ 00 | -1.05294E +01 | -1.05853E +01 | 4.08570E+ 00 | 4.29003E+ 00 | 6.32091E+ 00 |
| K' (Conic) | -3.07804E-01 | -1.00000E +00 | -2.43238E +01 | -2.83625E-01 | -3.26617E +00 | -1.00000E+ 00 |
| A(4th)/C4 | 1.49527E-0 4 | -7.56908E-04 | -1.06755E-02 | -3.69782E-02 | -1.97788E-02 | 4.61336E-0 3 |
| B(6th)/C5 | 8.42442E-0 5 | 2.47832E-0 3 | 1.22471E-0 2 | 3.87464E-0 2 | 2.66765E-0 2 | -3.56669E-03 |
| C(8th)/C6 | -1.28377E-04 | -8.99485E-04 | -6.23858E-03 | -1.24588E-02 | -1.70961E-02 | 1.00655E-0 2 |
| D(10th)/C 7 | 1.39548E-0 4 | 2.26130E-0 4 | 1.95276E-0 3 | -2.29041E-02 | 7.44404E-0 3 | -1.67187E-02 |
| E(12th)/C8 | -9.07657E-05 | -8.65006E-05 | -3.87243E-04 | 5.15627E-0 2 | -2.83217E-03 | 1.76140E-0 2 |
| F(14th)/C9 | 3.91825E-0 5 | 4.85978E-0 5 | 4.75514E-0 5 | -6.11378E-02 | 1.03979E-0 3 | -1.28012E-02 |
| G(16th)/C 10 | -1.18020E-05 | -2.16790E-05 | -3.30655E-06 | 4.93326E-0 2 | -3.09956E-04 | 6.66317E-0 3 |
| H(18th)/C 11 | 2.53393E-0 6 | 6.79606E-0 6 | 9.97169E-0 8 | -2.82606E-02 | 6.25200E-0 5 | -2.52171E-03 |
| J(20th)/C1 2 | -3.89812E-07 | -1.50481E-06 | 0.00000E+ 00 | 1.15931E-0 2 | -7.61628E-06 | 6.94502E-0 4 |
| K(22th)/C 13 | 4.26169E-0 8 | 2.35141E-0 7 | 0.00000E+ 00 | -3.38200E-03 | 4.90792E-0 7 | -1.37590E-04 |
| L(24th)/C1 | -3.23096E- | -2.53765E- | 0.00000E+ | 6.85022E-0 | -1.22462E- | 1.90828E-0 |
| 4 | 09 | 08 | 00 | 4 | 08 | 5 |
| M(26th)/C 15 | 1.61437E-1 0 | 1.79862E-0 9 | 0.00000E+ 00 | -9.15664E-05 | 0.00000E+ 00 | -1.75726E-06 |
| N(28th)/C 16 | -4.78040E-12 | -7.52790E-11 | 0.00000E+ 00 | 7.26242E-0 6 | 0.00000E+ 00 | 9.64481E-0 8 |
| O(30th)/C 17 | 6.35442E-1 4 | 1.40906E-1 2 | 0.00000E+ 00 | -2.58818E-07 | 0.00000E+ 00 | -2.38607E-09 |

FIG. 7B is a graph illustrating spherical aberration curves of the lens assembly 400 of FIG. 7A according to an embodiment of the disclosure, in which a horizontal axis indicates a coefficient of longitudinal spherical aberration, a vertical axis indicates a normalized distance from the optical axis O-I, and changes in longitudinal spherical aberration according to wavelength of light are shown. For example, the longitudinal spherical aberration curves are respectively shown for wavelengths of 656.3000 nm, 587.6000 nm, 546.1000 nm, 486.1000 nm, and 435.8000 nm of light. FIG. 7C is a graph illustrating astigmatic field curves of the lens assembly 400 according to an embodiment of the disclosure with respect to light having a wavelength of 546.1000 nm, in which "X" indicates a sagittal plane and "Y" indicates a tangential plane or a meridional plane. FIG. 7D is a graph illustrating distortion of the lens assembly 400 according to an embodiment of the disclosure with respect to light having a wavelength of 546.1000 nm.

### [Example 2]

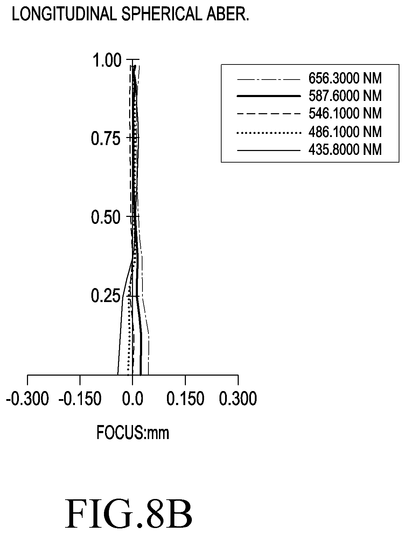

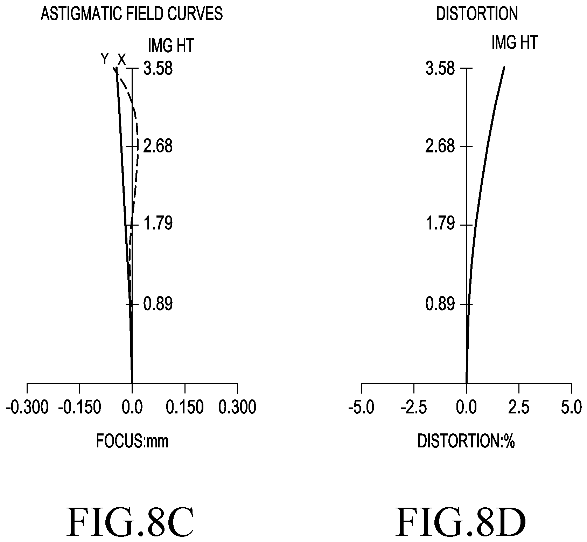

FIG. 8A is a view illustrating a configuration of a lens assembly according to an embodiment of the disclosure. FIG. 8B is a graph illustrating spherical aberration curves of the lens assembly of FIG. 8A according to an embodiment of the disclosure. FIG. 8C is a graph illustrating astigmatism curves of the lens assembly of FIG. 8A according to an embodiment of the disclosure. FIG. 8D is a graph illustrating a distortion aberration curve of the lens assembly of FIG. 8A according to an embodiment of the disclosure.

In an embodiment, the configuration of the lens assembly 500 may be at least partially identical or similar to the configurations of the lens assemblies 300 described above with reference to FIGS. 5 and 6, and may satisfy Formula 1 and Formula 2 described above. According to an embodiment, the configuration of the lens assembly 500 may satisfy Formula 3, Formula 4, and/or Formula 5 described above with reference to FIGS. 5 and 6.

In an embodiment, the lens assembly 500 of FIG. 8A may include all of the configurations and characteristics of the lens assemblies 300 described above with reference to FIGS. 5 and 6. For example, the descriptions of the lenses L1, L2, and L3, the reflective member M, the image sensor IS, the aperture sto, and the filter F of each of the lens assemblies 300 described above with reference to FIGS. 5 and 6 may be equally applied to the lens assembly 500 of FIG. 8A, and thus descriptions thereof may be omitted below. The arrangement of the reflective member M and the image sensor IS with respect to the lenses L1, L2, and L3 of each of the lens assemblies 300 described above with reference to FIGS. 5 and 6 may be applied to the lens assembly 500 of FIG. 8A.

In an embodiment, the lens assembly 500 may be manufactured according to the specifications illustrated in Table 4 below and may have the aspheric coefficients of Table 5. In Table 4, "Lens surface 1" may indicate a gap between the first lens L1 and the object O, and a measured value of the thickness may be a distance of the gap or an air gap.

The lens assembly 500 implemented according to the specifications of Table 4 below may have an effective focal length (EFL) of about 17.5 mm, an F-number (Fno) of about 2.829, an optical total length (OTTL) mm from an image plane of about 19.195 mm, a maximum image height (Max IH) of the image sensor IS of about 3.575 mm, and a total field of view (FOV) of about 22.7 degrees.

**[Table 4]**

| Lens surface | Curvature of radius | Thickness | H-Ape | Effective focal length (EFL) | Refractive index (nd) | Abbe number (vd) |
|---|---|---|---|---|---|---|
| Object (O) | infinity | infinity | | | | |
| 1 | infinity | 0.00000 | 3.42803 | | | |
| 2* | 4.90100 | 2.44469 | 3.20000 | 5.970 | 1.54410 | 56.11 |
| 3* | -8.04038 | 0.71932 | 3.20000 | | | |
| 6*(sto) | -5.90672 | 0.68311 | 2.46322 | -3.734 | 1.61444 | 25.94 |
| 5* | 3.97603 | 0.56137 | 2.09908 | | | |
| 6* | 13.65927 | 0.60044 | 2.10000 | 10.020 | 1.67074 | 19.24 |
| 7* | -13.31118 | 0.35548 | 2.15566 | | | |
| 8 | infinity | 6.00000 | 2.21852 | infinity | 1.73462 | 45.6 |
| 9 | infinity | 7.00000 | 2.63431 | | | |
| 10 | infinity | 0.21000 | 3.48173 | infinity | 1.51680 | 64.17 |
| 11 | infinity | 0.62028 | 3.49840 | | | |
| img | infinity | 0.00000 | 3.57646 | | | |

Table 5 below lists aspheric coefficients of the lenses L1, L2, and L3, and the aspheric coefficients may be calculated through Equation 1 described above with reference to Table 3.

**[Table 5]**

| Lens surface | S2 | S3 | S4 | S5 | S6 | S7 |
|---|---|---|---|---|---|---|
| Curvature of radius | 4.90100E+ 00 | -8.04038E+ 00 | -5.90672E+ 00 | 3.97603E+ 00 | 1.36593E+ 01 | -1.33112E+ 01 |
| K' (Conic) | -4.32608E-01 | -1.00000E+ 00 | -1.12191E+ 01 | -2.30671E-01 | -2.77292E+ 01 | -1.00000E+ 00 |
| A(4th)/C4 | 5.76501E-0 6 | -2.94743E-03 | -2.62822E-02 | -2.24975E-02 | 3.91016E-0 3 | 5.95175E-0 3 |
| B(6th)/C5 | -6.60522E-04 | 5.03325E-0 3 | 2.75225E-0 2 | -9.35267E-04 | -5.55886E-03 | 2.33936E-0 3 |
| C(8th)/C6 | 9.93567E-0 4 | -2.22001E-03 | -1.20499E-02 | 5.76968E-0 2 | -9.96048E-04 | -2.02859E-02 |
| D(10th)/C 7 | -7.69872E-04 | 7.70209E-0 4 | 1.57723E-0 3 | -1.19170E-01 | 1.02843E-0 2 | 3.94319E-0 2 |
| E(12th)/C 8 | 3.91507E-0 4 | -2.47225E-04 | 1.06046E-0 3 | 1.49845E-0 1 | -1.18622E-02 | -4.49591E-02 |
| F(14th)/C 9 | -1.37931E-04 | 6.62511E-0 5 | -7.11333E-04 | -1.31384E-01 | 7.09023E-0 3 | 3.48653E-0 2 |
| G(16th)/C 10 | 3.45206E-0 5 | -1.28592E-05 | 2.24643E-0 4 | 8.26440E-0 2 | -2.59173E-03 | -1.94740E-02 |
| H(18th)/C 11 | -6.21928E-06 | 1.62861E-0 6 | -4.51248E-05 | -3.76333E-02 | 6.03401E-0 4 | 8.00509E-0 3 |
| J(20th)/C 12 | 8.08788E-0 7 | -1.13473E-07 | 6.10655E-0 6 | 1.24095E-0 2 | -8.78541E-05 | -2.42524E-03 |
| K(22th)/C 13 | -7.52237E-08 | 1.01455E-0 9 | -5.52314E-07 | -2.93342E-03 | 7.32832E-0 6 | 5.34240E-0 4 |
| L(24th)/C 14 | 4.87849E-0 9 | 5.08420E-1 0 | 3.15277E-0 8 | 4.84581E-0 4 | -2.68424E-07 | -8.30541E-05 |
| M(26th)/ C15 | -2.09473E-10 | -3.94485E-11 | -9.90379E-10 | -5.31255E-05 | 0.00000E+ 00 | 8.62113E-0 6 |
| N(28th)/C 16 | 5.34971E-1 2 | 1.06700E-1 2 | 1.18597E-1 1 | 3.47331E-0 6 | 0.00000E+ 00 | -5.35394E-07 |
| O(30th)/C 17 | -6.14911E-14 | -4.64030E-15 | 0.00000E+ 00 | -1.02505E-07 | 0.00000E+ 00 | 1.50268E-0 8 |

FIG. 8B is a graph illustrating spherical aberration curves of the lens assembly 500 according to an embodiment of the disclosure, in which a horizontal axis indicates a coefficient of longitudinal spherical aberration, a vertical axis indicates a normalized distance from the optical axis O-I, and changes in longitudinal spherical aberration according to wavelength of light are shown. For example, the longitudinal spherical aberration curves are respectively shown for wavelengths of 656.3000 nm, 587.6000 nm, 546.1000 nm, 486.1000 nm, and 435.8000 nm of light. FIG. 8C is a graph illustrating astigmatic field curves of the lens assembly 500 according to an embodiment of the disclosure with respect to light having a wavelength of 546.1000 nm, in which "X" indicates a sagittal plane and "Y" indicates a tangential plane or a meridional plane. FIG. 8D is a graph illustrating a distortion curve of the lens assembly 500 according to an embodiment of the disclosure with respect to light having a wavelength of 546.1000 nm.

### [Example 3]

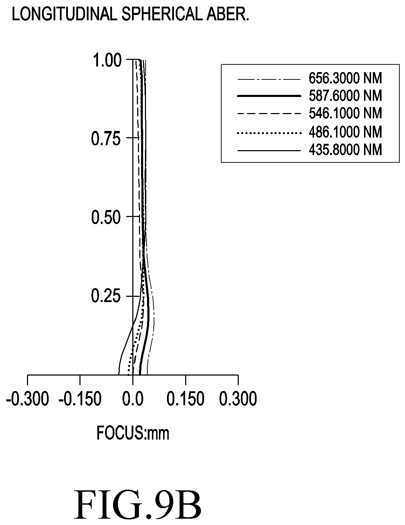

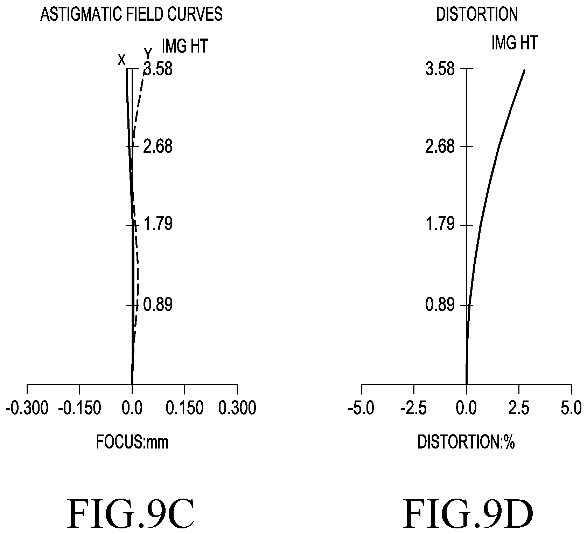

FIG. 9A is a view illustrating a configuration of a lens assembly according to an embodiment of the disclosure. FIG. 9B is a graph illustrating spherical aberration curves of the lens assembly of FIG. 9A according to an embodiment of the disclosure. FIG. 9C is a graph illustrating astigmatism curves of the lens assembly of FIG. 9A according to an embodiment of the disclosure. FIG. 9D is a graph illustrating a distortion aberration curve of the lens assembly of FIG. 9A according to an embodiment of the disclosure.

In an embodiment, the configuration of the lens assembly 600 may be at least partially identical or similar to the configurations of the lens assemblies 300 described above with reference to FIGS. 5 and 6, and may satisfy Formula 1 and Formula 2 described above. According to an embodiment, the configuration of the lens assembly 600 may satisfy Formula 3, Formula 4, and/or Formula 5 described above with reference to FIGS. 5 and 6.

In an embodiment, the lens assembly 600 of FIG. 9A may include all of the configurations and characteristics of the lens assemblies 300 described above with reference to FIGS. 5 and 6. For example, the descriptions of the lenses L1, L2, and L3, the reflective member M, the image sensor IS, the aperture sto, and the filter F of each of the lens assemblies 300 described above with reference to FIGS. 5 and 6 may be equally applied to the lens assembly 600 of FIG. 9A, and thus descriptions thereof may be omitted below. The arrangement of the reflective member M and the image sensor IS with respect to the lenses L1, L2, and L3 of each of the lens assemblies 300 described above with reference to FIGS. 5 and 6 may be applied to the lens assembly 600 of FIG. 9A.

In an embodiment, the lens assembly 600 may be manufactured according to the specifications illustrated in Table 6 below and may have the aspheric coefficients of Table 7. In Table 6, "Lens surface 1" may indicate a gap between the first lens L1 and the object O, and a measured value of the thickness may be a distance of the gap or an air gap.

The lens assembly 600 implemented according to the specifications of Table 6 below may have an effective focal length (EFL) of about 17.487 mm, an F-number (Fno) of about 2.943, an optical total length (OTTL) mm from an image plane of about 18.088 mm, a maximum image height (Max IH) of the image sensor IS of about 3.575 mm, and a total field of view (FOV) of about 22.5 degrees.

**[Table 6]**

| Lens surface | Curvature of radius | Thickness | H-Ape | Effective focal length (EFL) | Refractive index (nd) | Abbe number (vd) |
|---|---|---|---|---|---|---|
| Object (O) | infinity | infinity | | | | |
| 1 | infinity | 0.00000 | 3.32205 | | | |
| 2* | 4.78502 | 2.65319 | 3.10000 | 6.493 | 1.54410 | 56.11 |
| 3* | -11.03958 | 0.43037 | 2.68757 | | | |
| 4* | -11.04705 | 1.16549 | 2.42110 | -4.562 | 1.61444 | 25.94 |
| 5* | 3.95575 | 0.39148 | 2.10000 | | | |
| 6*(sto) | 4.18477 | 1.45071 | 1.90000 | 14.007 | 1.68042 | 18.15 |
| 7* | 6.34262 | 2.00000 | 1.85440 | | | |
| 8 | infinity | 6.00000 | 2.16805 | infinity | 1.59400 | 30.2 |
| 9 | infinity | 3.00000 | 2.85192 | | | |
| 10 | infinity | 0.21000 | 3.40417 | infinity | 1.51680 | 64.17 |
| 11 | infinity | 0.76679 | 3.42938 | | | |
| img | infinity | 0.02000 | 3.57626 | | | |

Table 7 below lists aspheric coefficients of the lenses L1, L2, and L3, and the aspheric coefficients may be calculated through Equation 1 described above with reference to Table 3.

**[Table 7]**

| Lens surface | S2 | S3 | S4 | S5 | S6 | S7 |
|---|---|---|---|---|---|---|
| Curvature of radius | 4.78502E+ 00 | -1.10396E+ 01 | -1.10471E+ 01 | 3.95575E+ 00 | 4.18477E+ 00 | 6.34262E+ 00 |
| K' (Conic) | -3.24910E-01 | -1.00000E+ 00 | -2.34038E+ 01 | -2.92997E-01 | -3.15565E+ 00 | -1.00000E+ 00 |
| A(4th)/C4 | 3.17256E-0 5 | -2.06716E-03 | -1.13615E-02 | -2.45934E-02 | -8.75570E-03 | 3.35134E-0 3 |
| B(6th)/C5 | 4.19961E-0 4 | 4.57185E-0 3 | 1.23474E-0 2 | 2.14089E-0 2 | 9.59330E-0 3 | -5.71052E-03 |
| C(8th)/C6 | -5.03287E-04 | -2.86900E-03 | -5.89364E-03 | -8.97943E-03 | -4.81905E-03 | 1.47838E-0 2 |
| D(10th)/C 7 | 3.96721E-0 4 | 1.88969E-0 3 | 1.72017E-0 3 | -2.16136E-03 | 1.76497E-0 3 | -2.20216E-02 |
| E(12th)/C 8 | -2.09754E-04 | -1.22404E-03 | -3.18100E-04 | 9.44674E-0 3 | -6.66786E-04 | 2.15882E-0 2 |
| F(14th)/C 9 | 7.78618E-0 5 | 6.25294E-0 4 | 3.64664E-0 5 | -1.22613E-02 | 2.61953E-0 4 | -1.48491E-02 |
| G(16th)/C 10 | -2.08563E-05 | -2.34346E-04 | -2.36911E-06 | 1.04166E-0 2 | -7.41442E-05 | 7.36571E-0 3 |
| H(18th)/C 11 | 4.08025E-0 6 | 6.38675E-0 5 | 6.67839E-0 8 | -6.19762E-03 | 1.15575E-0 5 | -2.66012E-03 |
| J(20th)/C1 2 | -5.82990E-07 | -1.26318E-05 | 0.00000E+ 00 | 2.61771E-0 3 | -5.93343E-07 | 6.97776E-0 4 |
| K(22th)/C 13 | 6.01110E-0 8 | 1.79369E-0 6 | 0.00000E+ 00 | -7.82168E-04 | -5.86806E-08 | -1.31133E-04 |
| L(24th)/C 14 | -4.35113E-09 | -1.78128E-07 | 0.00000E+ 00 | 1.61849E-0 4 | 6.34644E-0 9 | 1.71595E-0 5 |
| M(26th)/C 15 | 2.09619E-1 0 | 1.17398E-0 8 | 0.00000E+ 00 | -2.20856E-05 | 0.00000E+ 00 | -1.48178E-06 |
| N(28th)/C 16 | -6.03183E-12 | -4.61146E-10 | 0.00000E+ 00 | 1.78907E-0 6 | 0.00000E+ 00 | 7.57916E-0 8 |
| O(30th)/C 17 | 7.84014E-1 4 | 8.16833E-1 2 | 0.00000E+ 00 | -6.51988E-08 | 0.00000E+ 00 | -1.73724E-09 |

FIG. 9B is a graph illustrating spherical aberration curves of the lens assembly 600 according to an embodiment of the disclosure, in which a horizontal axis indicates a coefficient of longitudinal spherical aberration, a vertical axis indicates a normalized distance from the optical axis O-I, and changes in longitudinal spherical aberration according to wavelength of light are shown. For example, the longitudinal spherical aberration curves are respectively shown for wavelengths of 656.3000 nm, 587.6000 nm, 546.1000 nm, 486.1000 nm, and 435.8000 nm of light. FIG. 9C is a graph illustrating astigmatic field curves of the lens assembly 600 according to an embodiment of the disclosure with respect to light having a wavelength of 546.1000 nm, in which "X" indicates a sagittal plane and "Y" indicates a tangential plane or a meridional plane. FIG. 9D is a graph illustrating a distortion curve of the lens assembly 600 according to an embodiment of the disclosure with respect to light having a wavelength of 546.1000 nm.

### [Example 4]

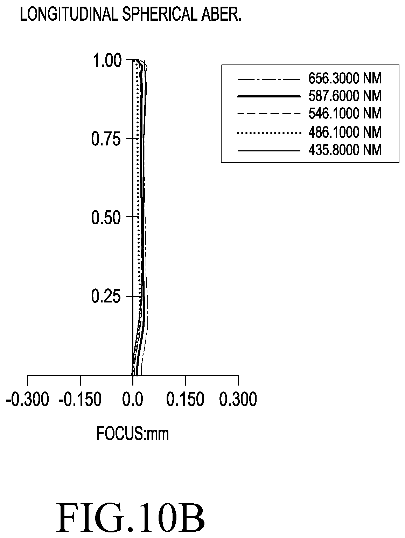

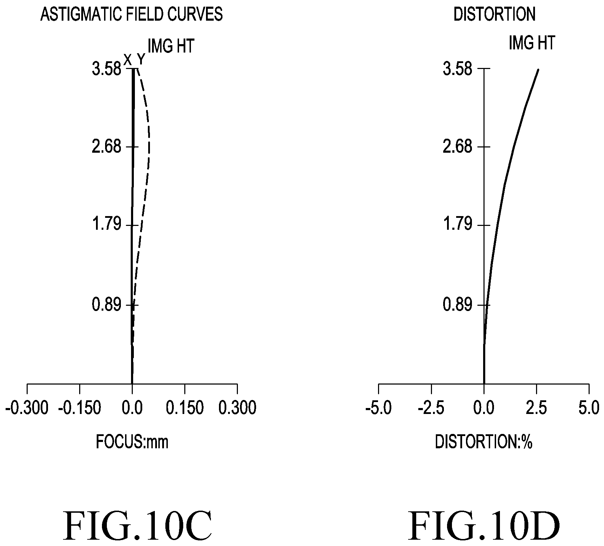

FIG. 10A is a view illustrating a configuration of a lens assembly according to an embodiment of the disclosure. FIG. 10B is a graph illustrating spherical aberration curves of the lens assembly of FIG. 10A according to an embodiment of the disclosure. FIG. 10C is a graph illustrating astigmatism curves of the lens assembly of FIG. 10A according to an embodiment of the disclosure. FIG. 10D is a graph illustrating a distortion aberration curve of the lens assembly of FIG. 10A according to an embodiment of the disclosure.

In an embodiment, the configuration of the lens assembly 700 may be at least partially identical or similar to the configurations of the lens assemblies 300 described above with reference to FIGS. 5 and 6, and may satisfy Formula 1 and Formula 2 described above. According to an embodiment, the configuration of the lens assembly 700 may satisfy Formula 3, Formula 4, and/or Formula 5 described above with reference to FIGS. 5 and 6.

In an embodiment, the lens assembly 700 of FIG. 10A may include all of the configurations and characteristics of the lens assemblies 300 described above with reference to FIGS. 5 and 6. For example, the descriptions of the lenses L1, L2, and L3, the reflective member M, the image sensor IS, the aperture sto, and the filter F of each of the lens assemblies 300 described above with reference to FIGS. 5 and 6 may be equally applied to the lens assembly 700 of FIG. 10A, and thus descriptions thereof may be omitted below. The arrangement of the reflective member M and the image sensor IS with respect to the lenses L1, L2, and L3 of each of the lens assemblies 300 described above with reference to FIGS. 5 and 6 may be applied to the lens assembly 700 of FIG. 10A.

In an embodiment, the lens assembly 700 may be manufactured according to the specifications illustrated in Table 8 below and may have the aspheric coefficients of Table 9. In Table 8, "Lens surface 1" may indicate a gap between the first lens L1 and the object O, and a measured value of the thickness may be a distance of the gap or an air gap.

The lens assembly 700 implemented according to the specifications of Table 8 below may have an effective focal length (EFL) of about 17 mm, an F-number (Fno) of about 2.742, an optical total length (OTTL) mm from an image plane of about 18.604 mm, a maximum image height (Max IH) of the image sensor IS of about 3.575 mm, and a total field of view (FOV) of about 23.1 degrees.

**[Table 8]**

| Lens surface | Curvature of radius | Thickness | H-Ape | Effective focal length (EFL) | Refractive index (nd) | Abbe number (vd) |
|---|---|---|---|---|---|---|
| Object (O) | infinity | infinity | | | | |
| 1 | infinity | 0.00000 | 3.34025 | | | |
| 2* | 4.64182 | 2.50000 | 3.10000 | 6.049 | 1.54410 | 56.11 |
| 3* | -9.30085 | 0.66520 | 3.10000 | | | |
| 4* | -8.26247 | 0.60000 | 2.39194 | -4.385 | 1.61444 | 25.94 |
| 5* | 4.16496 | 0.11652 | 2.10000 | | | |
| 6*(sto) | 4.21642 | 1.00000 | 2.00000 | 15.256 | 1.68042 | 18.15 |
| 7* | 6.35834 | 2.00000 | 1.92988 | | | |
| 8 | infinity | 10.00000 | 2.20840 | infinity | 1.58418 | 32.99 |
| 9 | infinity | 1.00000 | 3.28706 | | | |
| 10 | infinity | 0.21000 | 3.45994 | infinity | 1.51680 | 64.17 |
| 11 | infinity | 0.49247 | 3.48364 | | | |
| img | infinity | 0.02000 | 3.57623 | | | |

Table 9 below lists aspheric coefficients of the lenses L1, L2, and L3, and the aspheric coefficients may be calculated through Equation 1 described above with reference to Table 3.

**[Table 9]**

| Lens surface | S2 | S3 | S4 | S5 | S6 | S7 |
|---|---|---|---|---|---|---|
| Curvature of radius | 4.64182E+ 00 | -9.30085E+ 00 | -8.26247E+ 00 | 4.16496E+ 00 | 4.21642E+ 00 | 6.35834E+ 00 |
| K' (Conic) | -2.91863E-01 | -1.00000E+ 00 | -2.97421E+ 01 | 3.35444E-0 1 | -1.41454E+ 00 | -1.00000E+ 00 |
| A(4th)/C4 | 2.37598E-0 4 | 1.99054E-0 3 | -1.13873E-02 | -6.69864E-03 | 1.27567E-0 2 | 1.59072E-0 2 |
| B(6th)/C5 | -1.83259E-04 | 2.94719E-0 4 | 6.05317E-0 3 | -3.43954E-02 | -3.75698E-02 | -1.60170E-02 |
| C(8th)/C6 | 2.75246E-0 4 | 1.30983E-0 3 | 1.02141E-0 2 | 9.63876E-0 2 | 7.22358E-0 2 | 3.27328E-0 2 |
| D(10th)/C7 | -2.17309E-04 | -1.52693E-03 | -1.73203E-02 | -1.27519E-01 | -7.98939E-02 | -5.03160E-02 |
| E(12th)/C8 | 1.18136E-0 4 | 9.39748E-0 4 | 1.33850E-0 2 | 1.13313E-0 1 | 5.54432E-0 2 | 5.37529E-0 2 |
| F(14th)/C9 | -4.54985E-05 | -3.99673E-04 | -6.54872E-03 | -7.88634E-02 | -2.52509E-02 | -4.09500E-02 |
| G(16th)/C1 0 | 1.25474E-0 5 | 1.26367E-0 4 | 2.20364E-0 3 | 4.61891E-0 2 | 7.66696E-0 3 | 2.27741E-0 2 |
| H(18th)/C1 1 | -2.49432E-06 | -3.02084E-05 | -5.24538E-04 | -2.24323E-02 | **-1.53740E-**03 | -9.35934E-03 |
| J(20th)/C12 | 3.57617E-0 7 | 5.41744E-0 6 | 8.85201E-0 5 | 8.52331E-0 3 | 1.95382E-0 4 | 2.84101E-0 3 |
| K(22th)/C1 3 | -3.66332E-08 | -7.13127E-07 | -1.03873E-05 | -2.39442E-03 | -1.42411E-05 | -6.28171E-04 |
| L(24th)/C1 4 | 2.61578E-0 9 | 6.65083E-0 8 | 8.07479E-0 7 | 4.73103E-0 4 | 4.52856E-0 7 | 9.81147E-0 5 |
| M(26th)/C1 5 | -1.23738E-10 | -4.14470E-09 | -3.74348E-08 | -6.18024E-05 | 0.00000E+ 00 | -1.02251E-05 |
| N(28th)/Cl 6 | 3.48670E-1 2 | 1.54420E-1 0 | 7.84233E-1 0 | 4.78026E-0 6 | 0.00000E+ 00 | 6.35760E-0 7 |
| O(30th)/C1 7 | -4.43195E-14 | -2.59699E-12 | 0.00000E+ 00 | -1.65627E-07 | 0.00000E+ 00 | -1.77783E-08 |

FIG. 10B is a graph illustrating spherical aberration curves of the lens assembly 700 according to an embodiment of the disclosure, in which a horizontal axis indicates a coefficient of longitudinal spherical aberration, a vertical axis indicates a normalized distance from the optical axis O-I, and changes in longitudinal spherical aberration according to wavelength of light are shown. For example, the longitudinal spherical aberration curves are respectively shown for wavelengths of 656.3000 nm, 587.6000 nm, 546.1000 nm, 486.1000 nm, and 435.8000 nm of light. FIG. 10C is a graph illustrating astigmatic field curves of the lens assembly 700 according to an embodiment of the disclosure with respect to light having a wavelength of 546.1000 nm, in which "X" indicates a sagittal plane and "Y" indicates a tangential plane or a meridional plane. FIG. 10D is a graph illustrating a distortion curve of the lens assembly 700 according to an embodiment of the disclosure with respect to light having a wavelength of 546.1000 nm.

### [Example 5]

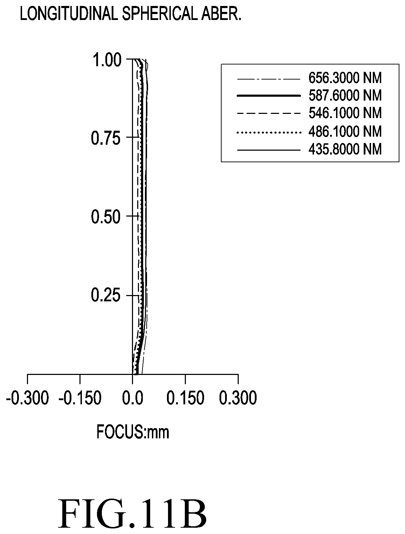

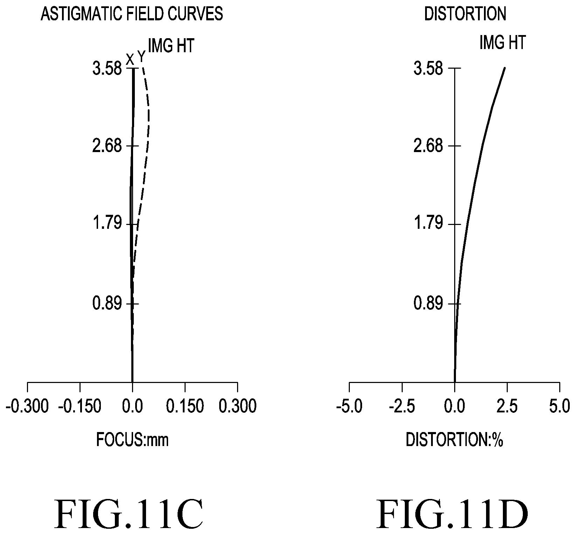

FIG. 11A is a view illustrating a configuration of a lens assembly according to an embodiment of the disclosure. FIG. 11B is a graph illustrating spherical aberration curves of the lens assembly of FIG. 11A according to an embodiment of the disclosure. FIG. 11C is a graph illustrating astigmatism curves of the lens assembly of FIG. 11A according to an embodiment of the disclosure.

In an embodiment, the configuration of the lens assembly 800 may be at least partially identical or similar to the configurations of the lens assemblies 300 described above with reference to FIGS. 5 and 6, and may satisfy Formula 1 and Formula 2 described above. According to an embodiment, the configuration of the lens assembly 800 may satisfy Formula 3, Formula 4, and/or Formula 5 described above with reference to FIGS. 5 and 6.

In an embodiment, the lens assembly 800 of FIG. 11A may include all of the configurations and characteristics of the lens assemblies 300 described above with reference to FIGS. 5 and 6. For example, the descriptions of the lenses L1, L2, and L3, the reflective member M, the image sensor IS, the aperture sto, and the filter F of each of the lens assemblies 300 described above with reference to FIGS. 5 and 6 may be equally applied to the lens assembly 800 of FIG. 11A, and thus descriptions thereof may be omitted below. The arrangement of the reflective member M and the image sensor IS with respect to the lenses L1, L2, and L3 of each of the lens assemblies 300 described above with reference to FIGS. 5 and 6 may be applied to the lens assembly 800 of FIG. 11A.

In an embodiment, the lens assembly 800 may be manufactured according to the specifications illustrated in Table 10 below and may have the aspheric coefficients of Table 11. In Table 10, "Lens surface 1" may indicate a gap between the first lens L1 and the object O, and a measured value of the thickness may be a distance of the gap or an air gap.

The lens assembly 800 implemented according to the specifications of Table 10 below may have an effective focal length (EFL) of about 17 mm, an F-number (Fno) of about 2.853, an optical total length (OTTL) mm from an image plane of about 18.890 mm, a maximum image height (Max IH) of the image sensor IS of about 3.575 mm, and a total field of view (FOV) of about 23.2 degrees.

**[Table 10]**

| Lens surface | Curvature of radius | Thickness | H-Ape | Effective focal length (EFL) | Refractive index (nd) | Abbe number (vd) |
|---|---|---|---|---|---|---|
| Object (O) | infinity | infinity | | | | |
| 1 | infinity | 0.00000 | 3.32110 | | | |
| 2* | 4.93738 | 2.50000 | 3.10000 | 6.208 | 1.54410 | 56.11 |
| 3* | -8.90172 | 0.66520 | 3.10000 | | | |
| 4* | -7.66998 | 0.60000 | 2.34007 | -4.739 | 1.61444 | 25.94 |
| 5* | 4.90573 | 0.11652 | 2.10000 | | | |
| 6*(sto) | 5.36551 | 1.00000 | 2.00000 | 17.000 | 1.94593 | 17.98 |
| 7* | 7.27110 | 2.00000 | 1.89350 | | | |
| 8 | infinity | 10.00000 | 2.17640 | infinity | 1.57518 | 36.15 |
| 9 | infinity | 1.00000 | 3.24354 | | | |
| 10 | infinity | 0.21000 | 3.41349 | infinity | 1.51680 | 64.17 |
| 11 | infinity | 0.77782 | 3.43680 | | | |
| img | infinity | 0.02000 | 3.57661 | | | |

Table 11 below lists aspheric coefficients of the lenses L1, L2, and L3, and the aspheric coefficients may be calculated through Equation 1 described above with reference to Table 3.

**[Table 11]**

| Lens surface | S2 | S3 | S4 | S5 | S6 | S7 |
|---|---|---|---|---|---|---|
| Curvature of radius | 4.93738E+00 | -8.90172E+00 | -7.66998E+00 | 4.90573E+00 | 5.36551E+00 | 7.27110E+00 |
| K' (Conic) | -3.33394E-01 | -1.00000E+00 | -2.78184E+01 | 2.64297E-01 | -1.41451E+00 | -1.00000E+00 |
| A(4th)/C4 | 2.32990E-04 | 2.51565E-03 | -1.29880E-02 | -1.76982E-02 | 3.19912E-03 | 1.20939E-02 |
| B(6th)/C5 | -2.42958E-04 | -2.74959E-04 | 1.27866E-02 | 1.24164E-02 | 2.82834E-04 | -6.19766E-03 |
| C(8th)/C6 | 2.74375E-04 | 1.78631E-03 | -2.18425E-03 | 1.64143E-02 | 5.40851E-03 | 1.20752E-02 |
| D(10th)/C7 | -1.73237E-04 | -1.76078E-03 | **-**4.18944E-03 | -5.03501E-02 | -1.07972E-02 | -2.12988E-02 |
| E(12th)/C8 | 7.57227E-05 | 9.63722E-04 | 4.24654E-03 | 6.81279E-02 | 9.49132E-03 | 2.56578E-02 |
| F(14th)/C9 | -2.37200E-05 | -3.52297E-04 | -2.08647E-03 | -6.35306E-02 | -4.83655E-03 | -2.14753E-02 |
| G(16th)/C10 | 5.32613E-0 6 | 9.17548E-0 5 | 6.26688E-0 4 | 4.40926E-0 2 | 1.54702E-0 3 | 1.28801E-0 2 |
| H(18th)/C11 | -8.44493E-07 | -1.75304E-05 | -1.17363E-04 | -2.28450E-02 | -3.15634E-04 | -5.63231E-03 |
| J(20th)/C12 | 9.15723E-0 8 | 2.48567E-0 6 | 1.23010E-0 5 | 8.70228E-0 3 | 3.99100E-0 5 | 1.80054E-0 3 |
| K(22th)/C13 | -6.33522E-09 | -2.60913E-07 | -3.12536E-07 | -2.38580E-03 | -2.84929E-06 | -4.15870E-04 |
| L(24th)/C14 | 2.28795E-10 | 1.98835E-08 | -8.37090E-08 | 4.56221E-04 | 8.76995E-08 | 6.74151E-05 |
| M(26th)/C15 | 8.25450E-14 | -1.04967E-09 | 9.86075E-09 | -5.76445E-05 | 0.00000E+00 | -7.25474E-06 |
| N(28th)/C16 | -3.17234E-13 | 3.45873E-11 | -3.53166E-10 | 4.32141E-06 | 0.00000E+00 | 4.63913E-07 |
| O(30th)/C17 | 8.09304E-15 | -5.38405E-13 | 0.00000E+00 | -1.45498E-07 | 0.00000E+00 | -1.32988E-08 |

FIG. 11B is a graph illustrating spherical aberration curves of the lens assembly 800 according to an embodiment of the disclosure, in which a horizontal axis indicates a coefficient of longitudinal spherical aberration, a vertical axis indicates a normalized distance from the optical axis O-I, and changes in longitudinal spherical aberration according to wavelength of light are shown. For example, the longitudinal spherical aberration curves are respectively shown for wavelengths of 656.3000 nm, 587.6000 nm, 546.1000 nm, 486.1000 nm, and 435.8000 nm of light. FIG. 11C is a graph illustrating astigmatic field curves of the lens assembly 800 according to an embodiment of the disclosure with respect to light having a wavelength of 546.1000 nm, in which "X" indicates a sagittal plane and "Y" indicates a tangential plane or a meridional plane. FIG. 11D is a graph illustrating a distortion curve of the lens assembly 800 according to an embodiment of the disclosure with respect to light having a wavelength of 546.1000 nm.

### [Example 6]

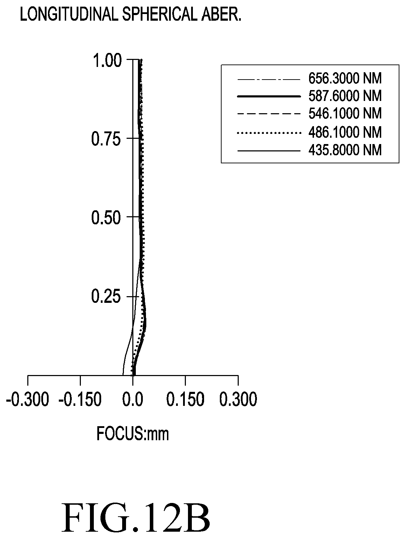

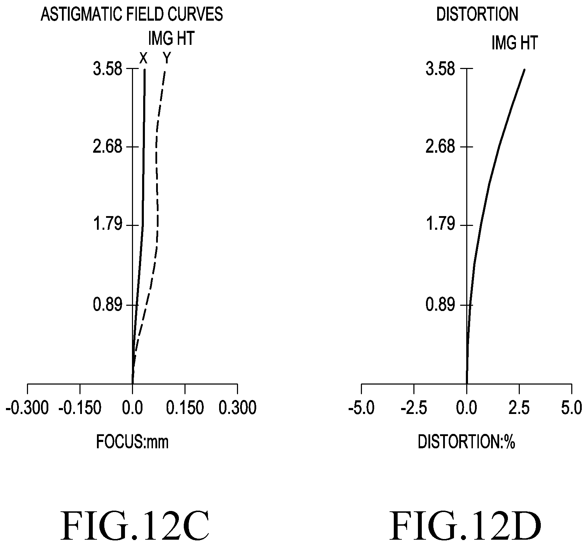

FIG. 12A is a view illustrating a configuration of a lens assembly according to an embodiment of the disclosure. FIG. 12B is a graph illustrating spherical aberration curves of the lens assembly of FIG. 12A according to an embodiment of the disclosure. FIG. 12C is a graph illustrating astigmatism curves of the lens assembly of FIG. 12A according to an embodiment of the disclosure. FIG. 12D is a graph illustrating a distortion aberration curve of the lens assembly of FIG. 12A according to an embodiment of the disclosure.

In an embodiment, the configuration of the lens assembly 900 may be at least partially identical or similar to the configurations of the lens assemblies 300 described above with reference to FIGS. 5 and 6, and may satisfy Formula 1 and Formula 2 described above. According to an embodiment, the configuration of the lens assembly 900 may satisfy Formula 3, Formula 4, and/or Formula 5 described above with reference to FIGS. 5 and 6.

In an embodiment, the lens assembly 900 may be manufactured according to the specifications illustrated in Table 12 below and may have the aspheric coefficients of Table 13. In Table 12, "Lens surface 1" may indicate a gap between the first lens L1 and the object O, and a measured value of the thickness may be a distance of the gap or an air gap.

In an embodiment, the lens assembly 900 of FIG. 12A may include all of the configurations and characteristics of the lens assemblies 300 described above with reference to FIGS. 5 and 6. For example, the descriptions of the lenses L1, L2, and L3, the reflective member M, the image sensor IS, the aperture sto, and the filter F of each of the lens assemblies 300 described above with reference to FIGS. 5 and 6 may be equally applied to the lens assembly 900 of FIG. 12A, and thus descriptions thereof may be omitted below. The arrangement of the reflective member M and the image sensor IS with respect to the lenses L1, L2, and L3 of each of the lens assemblies 300 described above with reference to FIGS. 5 and 6 may be applied to the lens assembly 900 of FIG. 12A.

The lens assembly 900 implemented according to the specifications of Table 12 below may have an effective focal length (EFL) of about 17.065 mm, an F-number (Fno) of about 2.942, an optical total length (OTTL) mm from an image plane of about 18.470 mm, a maximum image height (Max IH) of the image sensor IS of about 3.575 mm, and a total field of view (FOV) of about 23.0 degrees.

**[Table 12]**

| Lens surface | Curvature of radius | Thickness | H-Ape | Effective focal length (EFL) | Refractive index (nd) | Abbe number (vd) |
|---|---|---|---|---|---|---|
| Object (O) | infinity | infinity | | | | |
| 1 | infinity | 0.00000 | 3.11100 | | | |
| 2* | 4.60617 | 2.50000 | 2.90000 | 6.742 | 1.49700 | 81.61 |
| 3* | -10.18330 | 0.78319 | 3.10000 | | | |
| 4* | -9.04114 | 0.40449 | 2.18712 | -4.087 | 1.61444 | 25.94 |
| 5* | 3.58140 | 0.03000 | 2.10000 | | | |
| 6*(sto) | 3.09607 | 1.37345 | 2.00000 | 8.726 | 1.68042 | 18.15 |
| 7* | 5.22667 | 2.00000 | 1.86732 | | | |
| 8 | infinity | 10.00000 | 2.15592 | infinity | 1.54991 | 50.63 |
| 9 | infinity | 0.50000 | 3.33242 | | | |
| 10 | infinity | 0.21000 | 3.42465 | infinity | 1.51680 | 64.17 |
| 11 | infinity | 0.64859 | 3.44992 | | | |
| img | infinity | 0.02000 | 3.57613 | | | |

Table 13 below lists aspheric coefficients of the lenses L1, L2, and L3, and the aspheric coefficients may be calculated through Equation 1 described above with reference to Table 2.

**[Table 13]**

| Lens surface | S2 | S3 | S4 | S5 | S6 | S7 |
|---|---|---|---|---|---|---|
| Curvature of radius | 4.60617E+00 | -1.01833E+01 | -9.04114E+00 | 3.58140E+00 | 3.09607E+00 | 5.22667E+00 |
| K' (Conic) | -2.45417E-01 | -1.00000E+00 | -3.99297E+01 | 3.68003E-01 | -1.20292E+00 | -1.00000E+00 |
| A(4th)/C4 | -2.56880E-04 | 4.24009E-0 3 | -7.39266E-03 | 8.29967E-04 | 1.59868E-02 | 1.03462E-02 |
| B(6th)/C5 | 1.65828E-03 | -7.45858E-03 | -1.66538E-02 | -9.72415E-02 | -8.10318E-02 | 1.18685E-02 |
| C(8th)/C6 | -2.67429E-03 | 1.29747E-02 | 6.55034E-02 | 2.36662E-01 | 1.79618E-01 | -4.57724E-02 |
| D(10th)/C 7 | 2.59511E-0 3 | -1.28124E-02 | -8.92118E-02 | -2.61745E-01 | -2.10894E-01 | 8.82675E-0 2 |
| E(12th)/C8 | -1.64171E-03 | 8.55549E-0 3 | 7.27172E-0 2 | 1.49048E-0 1 | 1.51462E-0 1 | -1.09700E-01 |
| F(14th)/C9 | 7.16958E-0 4 | -4.11644E-03 | -4.00898E-02 | -2.56975E-02 | -7.07929E-02 | 9.35840E-0 2 |
| G(16th)/C10 | -2.23130E-04 | 1.46262E-03 | 1.56561E-02 | -2.53451E-02 | 2.20394E-02 | -5.63910E-02 |
| H(18th)/C11 | 5.02529E-05 | -3.86453E-04 | -4.39991E-03 | 2.32942E-02 | -4.54243E-03 | 2.43066E-02 |
| J(20th)/C12 | -8.21117E-06 | 7.56122E-05 | 8.86410E-04 | -1.01959E-02 | 5.95670E-04 | -7.49868E-03 |
| K(22th)/C 13 | 9.63617E-07 | -1.07923E-05 | -1.25064E-04 | 2.83511E-03 | -4.50042E-05 | 1.63637E-03 |
| L(24th)/C14 | -7.91181E-08 | 1.09093E-06 | 1.17412E-05 | -5.25970E-04 | 1.49044E-06 | -2.45678E-04 |
| M(26th)/C15 | 4.31272E-09 | -7.39376E-08 | -6.58901E-07 | 6.36332E-05 | 0.00000E+00 | 2.40464E-05 |
| N(28th)/C16 | -1.40160E-10 | 3.01226E-09 | 1.67224E-08 | -4.56938E-06 | 0.00000E+00 | -1.37607E-06 |
| O(30th)/C17 | 2.05479E-12 | -5.57485E-11 | 0.00000E+00 | 1.48252E-07 | 0.00000E+00 | 3.47886E-08 |

FIG. 12B is a graph illustrating spherical aberration curves of the lens assembly 900 according to an embodiment of the disclosure, in which a horizontal axis indicates a coefficient of longitudinal spherical aberration, a vertical axis indicates a normalized distance from the optical axis O-I, and changes in longitudinal spherical aberration according to wavelength of light are shown. For example, the longitudinal spherical aberration curves are respectively shown for wavelengths of 656.3000 nm, 587.6000 nm, 546.1000 nm, 486.1000 nm, and 435.8000 nm of light. FIG. 12C is a graph illustrating astigmatic field curves of the lens assembly 900 according to an embodiment of the disclosure with respect to light having a wavelength of 546.1000 nm, in which "X" indicates a sagittal plane and "Y" indicates a tangential plane or a meridional plane. FIG. 12D is a graph illustrating a distortion curve of the lens assembly 900 according to an embodiment of the disclosure with respect to light having a wavelength of 546.1000 nm.

A lens assembly (or an optical system) including a plurality of lenses may be applied to camera modules of various electronic devices (e.g., a smartphone, a tablet PC, a smartwatch, or a drone). In general, aberration caused by shapes of lenses occurs in an optical system, and such aberration needs to be minimized in order to provide favorable optical performance.

A lens assembly for implementing a telephoto lens may be implemented as a folded optical system including a reflective member (e.g., a prism and/or a mirror) configured to reflect a path of light passing through a lens group at least once. Such a folded optical system may be designed, for example, in a structure in which two reflective members are disposed front and rear, with a lens group including a plurality of lenses disposed between the two reflective members, and, as another method, in a structure in which a reflective member is disposed between a lens group and an image sensor. In the former case, since the lens group is disposed between the two reflective members, there may be a limit to increasing a size of the lenses and a size of the folded optical system, alignment of a path of light may be difficult, and manufacture of an optical system having a low F-number may be difficult. In contrast, in the latter case, since lenses having a relatively large size may be disposed compared to the former case, it may be relatively easy to implement an optical system having a low F-number. In addition, in the latter case, it may be easier to align a path of light than in the former case. In addition, in the latter case, it may be easier to adjust a size of the folded optical system than in the former case.

A lens assembly 300, 400, 500, 600, 700, 800, or 900 according to an embodiment of the disclosure may include three lenses L1, L2, and L3 and may include a reflective member M configured to reflect and/or refract light transmitted through a lens group. The lens assembly 300, 400, 500, 600, 700, 800, or 900 according to an embodiment of the disclosure may be a folded optical system for implementing a telephoto lens. For example, the lens assembly 300, 400, 500, 600, 700, 800, or 900 may secure a relatively large back focal length (BFL) and telephoto ratio with respect to space by changing a path of light to the image sensor IS once or more using the reflective member M, and accordingly may contribute to miniaturization and weight reduction of the lens assembly and an electronic device (e.g., the electronic device 101 of FIGS. 1, 3, and 4) in which the assembly is to be mounted. For example, by including the reflective member M, an arrangement direction of an imaging plane img of the image sensor IS with respect to an arrangement of the lenses L1, L2, and L3 may be variously designed. Accordingly, an optical system (or an imaging device or a camera module) having high optical performance (e.g., telephoto performance) may be implemented in a miniaturized and lightweight electronic device 101 such as a smartphone. The lens assembly according to an embodiment of the disclosure may provide a high-resolution image while providing favorable telephoto performance by suppressing or minimizing chromatic aberration caused by the reflective member M through a combination of refractive powers, shapes, and materials of the lenses.

The technical problems to be achieved by the disclosure are not limited to the above-mentioned technical problems, and other technical problems not mentioned above will be clearly understood by those having ordinary skill in the art from the description of the present document.

The effects that may be obtained by the disclosure are not limited to the above-mentioned effects, and other effects not mentioned above will be clearly understood by a person having ordinary skill in the art to which the disclosure pertains from the following description.

An embodiment of the disclosure may provide an electronic device 101. The electronic device 101 may include a lens assembly. The lens assembly may include a lens group including a plurality of lenses aligned along at least a portion of an optical axis in a direction from an object side toward an image side, an image sensor including an imaging plane on which an image is formed, and a reflective member disposed between the lens group and the image sensor and configured to change a path of light passing through the lens group once or twice. Among the plurality of lenses, a first lens, which is closest to the object side, may include a synthetic resin and have positive refractive power, and an object side surface of the first lens may be convex toward the object side. Among the plurality of lenses, a second lens, which is second closest to the object side, may have negative refractive power, an image side surface of the second lens may be concave toward the image side, and at least one of an object side surface or the image side surface of the second lens may be aspherical. Among the plurality of lenses, a lens closest to the image side may have an object side surface that is convex toward the object side, and at least one of the object side surface or an image side surface of the lens closest to the image side may be aspherical. The lens assembly may satisfy Formula 1 and Formula 2 below.$25 < L 1 Abbe - L 2 Abbe < 60$$L 3 Abbe < 21$

Here, L1 Abbe in Formula 1 is an Abbe number of the first lens L1, L2 Abbe is an Abbe number of the second lens L2, and L3 Abbe in Formula 2 is an Abbe number of the lens L3 closest to the image side among the plurality of lenses.

According to an embodiment, at least one of the plurality of lenses of the lens group may be configured to perform a focusing operation by moving in a first direction in which the plurality of lenses are aligned, and/or to perform an optical image stabilization operation by moving in at least one direction perpendicular to the first direction. According to an embodiment, when at least one of the plurality of lenses is moved to perform the focusing operation and/or the optical image stabilization operation, the image sensor and the reflective member may be maintained in a fixed state.

According to an embodiment, the image sensor may be configured to perform a focusing operation by moving in a first direction in which the plurality of lenses are aligned, and/or to perform an optical image stabilization operation by moving in at least one direction perpendicular to the first direction. According to an embodiment, when the image sensor is moved to perform the focusing operation and/or the optical image stabilization operation, the plurality of lenses of the lens group may be maintained in a fixed state.

According to an embodiment, the lens assembly may satisfy Formula 3 below.$1.15 < OTTL / BFL < 1.71$

Here, OTTL is a distance from an apex of the object side surface of the first lens to the image sensor, and BFL is a distance from an apex of the image side surface of the lens (L3) closest to the image side to the imaging plane of the image sensor.

According to an embodiment, the lens assembly may satisfy Formula 4 below.$0.8 < EFL / L 3 EFL < 2.16$

Here, EFL is an effective focal length of the lens assembly, and L3 EFL is a focal length of the lens (L3) closest to the image side.

According to an embodiment, the reflective member may include a prism configured to reflect a path of light passing through the lens group twice and transmit the light to the image sensor.

According to an embodiment, the prism may have a triangular cross section in a section parallel to the optical axis.

According to an embodiment, the reflective member may include one or two mirrors.

According to an embodiment, the lens assembly may satisfy Formula 5 below.$- 0.86 < L 2 EFL / L 1 EFL < - 0.51$

Here, L1 EFL is a focal length of the first lens, and L2 EFL is a focal length of the second lens.

According to an embodiment, the lens L3 closest to the image side may be a third lens which is third closest to the object side.

According to an embodiment, the lens assembly may further include an aperture sto disposed closer to the object side surface of the third lens.

According to an embodiment, the imaging plane of the image sensor may be disposed to be inclined with respect to a first direction in which the plurality of lenses are aligned.

According to an embodiment, at least a portion of an image side surface of the first lens, including a portion adjacent to the optical axis, may be convex toward the image side.

According to an embodiment, at least a portion of the object side surface of the second lens, including a portion adjacent to the optical axis, may be concave toward the object side.

Various other embodiments may also be possible.

An embodiment of the disclosure may provide an electronic device 101. The electronic device may include a lens assembly 400, 500, 600, 700, 800, or 900. The lens assembly may include a lens group including a plurality of lenses aligned along a portion of an optical axis O-I in a direction from an object O side toward an image I side, an image sensor IS including an imaging plane img on which an image I is formed, and a reflective member M disposed between the lens group and the image sensor and configured to change a path of light passing through the lens group once or twice. Among the plurality of lenses, a first lens L1, which is closest to the object side, may include a synthetic resin and have positive refractive power, and an object side surface S2 of the first lens L1 may be convex toward the object side. Among the plurality of lenses, a second lens L2, which is second closest to the object side, may have negative refractive power, an image side surface S5 of the second lens L2 may be concave toward the image side, and at least one of an object side surface S4 or the image side surface S5 of the second lens L2 may be aspherical. Among the plurality of lenses, a lens L3, which is closest to the image side, may have an object side surface S6 that is convex toward the object side, and at least one of the object side surface S6 or an image side surface S7 of the lens L3 may be aspherical. The lens assembly may satisfy Formula 1 and Formula 2 below. $25 < L 1 Abbe - L 2 Abbe < 60$$L 3 Abbe < 21$

Here, L1 Abbe in Formula 1 may be an Abbe number of the first lens L1, L2 Abbe may be an Abbe number of the second lens L2, and L3 Abbe in Formula 2 may be an Abbe number of the lens L3 closest to the image side among the plurality of lenses.

According to an embodiment, the image sensor and/or one or more lenses included in the lens group (or at least one of the plurality of lenses) may be configured to perform a focusing operation by moving in a first direction in which the plurality of lenses of the lens group are aligned, or to perform an optical image stabilization operation by moving in at least one direction perpendicular to the first direction. According to an embodiment, when the image sensor is moved to perform the focusing operation and/or the optical image stabilization operation, the plurality of lenses of the lens group may be maintained in a fixed state. According to an embodiment, when at least one of the plurality of lenses is moved to perform the focusing operation and/or the optical image stabilization operation, the image sensor and the reflective member may be maintained in a fixed state.

According to an embodiment, the lens assembly may satisfy Formula 3 below.$1.15 < OTTL / BFL < 1.71$

Here, OTTL is a distance from an apex of the object side surface of the first lens to the image sensor, and BFL is a distance from an apex of the image side surface of the third lens closest to the image side to the imaging plane of the image sensor.

According to an embodiment, the lens assembly may satisfy Formula 4 below.$0.8 < EFL / L 3 EFL < 2.16$

Here, EFL is an effective focal length of the lens assembly, and L3 EFL is a focal length of the third lens.

According to an embodiment, the reflective member may include a prism configured to reflect a path of light passing through the lens group twice and transmit the light to the image sensor and having a triangular cross section in a section parallel to the optical axis.

According to an embodiment, the lens assembly may satisfy Formula 5 below. $- 0.86 < L 2 EFL / L 1 EFL < - 0.51$

Here, L1 EFL is a focal length of the first lens, and L2 EFL is a focal length of the second lens.

Various other embodiments may also be possible.

An embodiment of the disclosure should be understood as an example rather than limiting the disclosure. It will be apparent to those skilled in the art that various changes may be made in form and detail without departing from the broader scope of the disclosure, including the appended claims and equivalents thereof.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that an embodiment of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{TM}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising a lens assembly,
wherein the lens assembly (400; 500; 600; 700; 800; 900) comprises:
a lens group including a plurality of lenses aligned along an optical axis (O-I) in a direction from an object (O) side toward an image (I) side,
an image sensor (IS) including an imaging plane (img) on which an image (I) is formed, and
a reflective member (M) disposed between the lens group and the image sensor and configured to change a path of light passing through the lens group once or twice,
wherein a first lens (L1), which is closest to the object side among the plurality of lenses, includes a synthetic resin and has positive refractive power, wherein an object side surface (S2) of the first lens is convex toward the object side,
wherein a second lens (L2), which is second closest to the object side among the plurality of lenses, has negative refractive power, wherein an image side surface (S5) of the second lens is concave toward the image side, and at least one of an object side surface (S4) of the second lens or an image side surface (S5) of the second lens is aspherical,
wherein a lens (L3), which is closest to the image side among the plurality of lenses, has an object side surface (S6) that is convex toward the object side, and at least one of the object side surface (S6) or an image side surface (S7) of the lens (L3) is aspherical, and
wherein the lens assembly satisfies Formula 1 and Formula 2 below, $25 < L 1 Abbe - L 2 Abbe < 60$ $L 3 Abbe < 21$
wherein L1 Abbe in Formula 1 is an Abbe number of the first lens (L1), L2 Abbe is an Abbe number of the second lens (L2), and L3 Abbe in Formula 2 is an Abbe number of the lens (L3) closest to the image side among the plurality of lenses.

2. The electronic device of claim 1, wherein at least one of the plurality of lenses of the lens group is configured to perform a focusing operation by moving in a first direction in which the plurality of lenses are aligned, or to perform an optical image stabilization operation by moving in at least one direction perpendicular to the first direction.

3. The electronic device of claim 1 or 2, wherein the image sensor is configured to perform a focusing operation by moving in a first direction in which the plurality of lenses are aligned, or to perform an optical image stabilization operation by moving in at least one direction perpendicular to the first direction.

4. The electronic device of any one of claims 1 to 3, wherein the lens assembly satisfies Formula 3 below, $1.15 < OTTL / BFL < 1.71$ wherein OTTL is a distance from an apex of the object side surface of the first lens to the image sensor, and BFL is a distance from an apex of the image side surface of the lens (L3) closest to the image side to the imaging plane of the image sensor.

5. The electronic device of any one of claims 1 to 4, wherein the lens assembly satisfies Formula 4 below, $0.8 < EFL / L 3 EFL < 2.16$ wherein EFL is an effective focal length of the lens assembly, and L3 EFL is a focal length of the lens (L3) closest to the image side.

6. The electronic device of any one of claims 1 to 5, wherein the reflective member includes a prism configured to reflect a path of light passing through the lens group twice and transmit the light to the image sensor.

7. The electronic device of claim 6, wherein the prism has a triangular cross section in a section parallel to the optical axis.

8. The electronic device of any one of claims 1 to 7, wherein the reflective member includes one or two reflective surfaces (M1; M2).

9. The electronic device of any one of claims 1 to 8, wherein the lens assembly satisfies Formula 5 below, $- 0.86 < L 2 EFL / L 1 EFL < - 0.51$ wherein L1 EFL is a focal length of the first lens, and L2 EFL is a focal length of the second lens.

10. The electronic device of any one of claims 1 to 9, wherein the lens (L3) closest to the image side is a third lens which is third closest to the object side.

11. The electronic device of claim 10, wherein the lens assembly further comprises an aperture (sto) disposed closer to the object side surface of the third lens.

12. The electronic device of any one of claims 1 to 11, wherein the imaging plane of the image sensor is disposed to be inclined with respect to a first direction in which the plurality of lenses are aligned.

13. The electronic device of any one of claims 1 to 12, wherein at least a portion of an image side surface of the first lens, including a portion adjacent to the optical axis, is convex toward the image side.

14. The electronic device of any one of claims 1 to 13, wherein at least a portion of the object side surface of the second lens, including a portion adjacent to the optical axis, is concave toward the object side.

15. A lens assembly (400; 500; 600; 700; 800; 900) comprising:
a lens group including a plurality of lenses aligned along an optical axis (O-I) in a direction from an object (O) side toward an image (I) side;
an image sensor (IS) including an imaging plane (img) on which an image (I) is formed; and
a reflective member (M) disposed between the lens group and the image sensor and configured to change a path of light passing through the lens group once or twice,
wherein a first lens (L1), which is closest to the object side among the plurality of lenses, includes a synthetic resin and has positive refractive power, wherein an object side surface (S2) of the first lens is convex toward the object side,
wherein a second lens (L2), which is second closest to the object side among the plurality of lenses, has negative refractive power, wherein an image side surface (S5) of the second lens is concave toward the image side, and at least one of an object side surface (S4) of the second lens or an image side surface (S5) of the second lens is aspherical,
wherein a third lens (L3), which is third closest to the object side among the plurality of lenses, has an object side surface (S6) that is convex toward the object side, and at least one of the object side surface (S6) or an image side surface (S7) of the third lens (L3) is aspherical, and
wherein the lens assembly satisfies Formula 1 and Formula 2 below, $25 < L 1 Abbe - L 2 Abbe < 60$ $L 3 Abbe < 21$
wherein L1 Abbe in Formula 1 is an Abbe number of the first lens (L1), L2 Abbe is an Abbe number of the second lens (L2), and L3 Abbe in Formula 2 is an Abbe number of the third lens (L3).
